(19) Europäisches Patentamt
European Patent Office
Office européen des brevets

(11) EP 3 490 774 B1

(12) **EUROPEAN PATENT SPECIFICATION**

(45) Date of publication and mention of the grant of the patent:
**25.06.2025 Bulletin 2025/26**

(21) Application number: **17758296.2**

(22) Date of filing: **28.07.2017**

(51) International Patent Classification (IPC):
***B29C 45/00*** $^{(2006.01)}$ ***C08L 69/00*** $^{(2006.01)}$
***C08L 83/10*** $^{(2006.01)}$

(52) Cooperative Patent Classification (CPC):
(C-Sets available)
**B29C 45/0001** (Cont.)

(86) International application number:
**PCT/IB2017/054628**

(87) International publication number:
**WO 2018/020480 (01.02.2018 Gazette 2018/05)**

(54) **POLYCARBONATE BLENDS FOR HIGH RELEASE PERFORMANCE**

POLYCARBONATMISCHUNGEN FÜR HOHE FREISETZUNGSLEISTUNG

MÉLANGES DE POLYCARBONATE POUR UNE PERFORMANCE DE LIBÉRATION ÉLEVÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.07.2016 EP 16382370**

(43) Date of publication of application:
**05.06.2019 Bulletin 2019/23**

(73) Proprietor: **SHPP Global Technologies B.V.**
**4612 PX Bergen op Zoom (NL)**

(72) Inventors:
- **MARTINEZ CANOVAS, Maria Dolores**
**30009 Murcia (ES)**
- **VAN DER MEE, Mark Adrianus Johannes**
**4811 VM Breda (NL)**
- **VAN DE GRAMPEL, Robert Dirk**
**4691 DK Tholen (NL)**
- **BRUSS, Erhard**
**53424 Remagen (DE)**

(74) Representative: **Modiano, Micaela Nadia**
**Modiano & Partners SA**
**Steinsdorfstraße 14**
**80538 München (DE)**

(56) References cited:
**WO-A1-2009/017938**
**WO-A1-2015/159246**
**WO-A1-2016/016850**
**US-A1- 2007 010 635**
**US-A1- 2014 275 368**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 490 774 B1

(52) Cooperative Patent Classification (CPC): (Cont.)

C-Sets
**C08L 69/00, C08L 83/10**

## Description

TECHNICAL FIELD

The disclosure concerns polycarbonate blends that provide high mold release performance.

BACKGROUND

Polycarbonate is used in many applications because of its excellent balance of good impact performance, heat properties, flowability and aesthetics. Polycarbonate (PC) compositions can be formulated for high flow (e.g. via molecular weight reduction or flow promotors) and/or high impact (e.g. impact modifiers such as methacrylate-butadiene-styrene (MBS) or siloxane copolymers). The addition of siloxane copolymers to polycarbonate resin not only improves the impact performance at low temperatures, but also other properties such as flow and release performance. Trends in part design in several markets are driving towards parts that are thinner, more complex and have advanced styling features. In general, this requires materials that flow even better to fill large and complex parts, still have good enough impact properties and have sufficient release to ensure proper de-molding of the part in general, but especially in case of decreased draft core angle.

Release additives, such as pentaerythritol stearate, glycerol monostearate and poly-alpha-olefin as examples, are commonly added to improve the demolding of the piece once it's molded.

Therefore, materials are desired that offer an improved balance of flow (as indicated by a melt flow volume rate (MVR) of 10 cubic centimeters ($cm^3$)/10 minutes (min) and higher, measured at 300 degrees Celsius (°C) and 1.2 kilogram (Kg) load), good impact (as indicated by ductile Izod notched impact strength), preferably at low temperatures below 0°C, and sufficient release to allow very sharp draft angles for applications like automotive bezels or reflectors and mobile phone housings.

These and other shortcomings are addressed by aspects of the present disclosure.

WO2016016850 discloses a polycarbonate composition that comprises a polycarbonate polymer formed by a melt process; a hexamethylene-bis[3-(3,5-di-tert-butyl-4-hydroxyphenyl) propionate] antioxidant; and optionally a phosphite stabilizer, indicated as maintaining its color and transparency for long time periods.

US2007010635 discloses a thermoplastic composition comprising a polycarbonate, a polysiloxane-polycarbonate, and a gel-type low gloss additive, wherein the 60° gloss is measured to be less than or equal to 90 GU according to ASTM D2457. The thermoplastic composition is indicated as having excellent impact strength and color capability. A method of making the thermoplastic composition, and an article comprising the thermoplastic composition are also disclosed.

Blended polycarbonate compositions comprising one or more polycarbonate polymer, polycarbonate/ siloxane copolymer(s), a mineral filler, and an alkyl sulfonate salt having improved mold release properties are known from US 2014/275368 A1.

SUMMARY

The invention provides a polycarbonate blend comprising:

50 wt% to 98 wt% of one or more polycarbonates produced by a melt polymerization process;
2 wt% to 50 wt% of a polycarbonate-polysiloxane copolymer with a siloxane content of 10 wt% to 40 wt% based on the total weight of the polycarbonate-polysiloxane copolymer, in an amount effective to provide a total siloxane content of 0.5 wt% to 10 wt% based on the total weight of the polycarbonate blend; and
optionally, 0.05 wt% to 1.0 wt% release agent;
wherein the blend has a Fries number of 200 ppm or higher based on the total blend; and wherein
the polycarbonate blend has a release from mold ejection force that is at least 10% less than a substantially similar reference blend including only polycarbonates produced by an interfacial polymerization process; or
the polycarbonate blend has a release from mold coefficient of friction that is at least 10% less than a substantially similar reference blend including polycarbonates produced by an interfacial polymerization process.

The invention also provides a molded article comprising the polycarbonate blend of the invention, preferably having an ejection force of less than 600 N when ejection force of the molded article comprising the polycarbonate blend is evaluated by injection molding a sleeve comprising the polycarbonate blend in a core and determining the force necessary to remove the sleeve from the core.

The release agent may be present in an amount of 0.1 wt% to 1 wt% based on the total weight of the polycarbonate blend or of the molded article, preferably the release agent comprising one or more of pentaerythritol

stearate, glycerol monostearate and poly-alpha-olefin.

The poly(carbonate-siloxane) copolymer may comprise bisphenol carbonate units of the formula

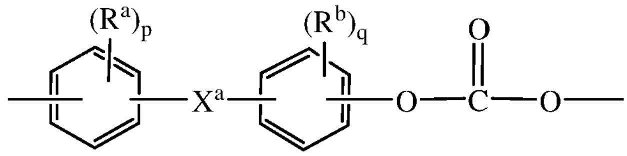

wherein

$R^a$ and $R^b$ are each independently $C_{1-12}$ alkyl, $C_{1-12}$ alkenyl, $C_{3-8}$ cycloalkyl, or $C_{1-12}$ alkoxy,
p and q are each independently 0 to 4, and
$X^a$ is a single bond, -O-, -S-, -S(O)-, $-S(O)_2-$, -C(O)-, a $C_{1-11}$ alkylidene of formula - $C(R^c)(R^d)$ - wherein $R^c$ and $R^d$ are each independently hydrogen or $C_{1-10}$ alkyl, or a group of the formula $-C(=R^e)-$ wherein $R^e$ is a divalent $C_{1-10}$ hydrocarbon group; and
siloxane units of the formulas

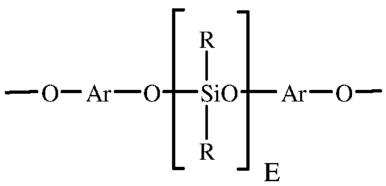 , 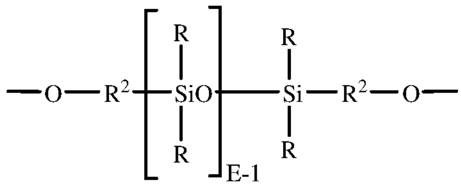 ,

or a combination comprising at least one of the foregoing, wherein
R is each independently a $C_{1-13}$ monovalent hydrocarbon group,
Ar is each independently a $C_{6-30}$ aromatic group,
$R^2$ is each independently a $C_{2-8}$ alkylene group, and
E has an average value of 10 to 200.

The blend may have a Fries number of about 400 ppm or higher based on the total blend.

The blend or article may comprise:

70 wt% to 97.4 wt% polycarbonate;
2.5 wt% to 30 wt% polycarbonate-polysiloxane copolymer with a siloxane content of 15 wt% to 25 wt% based on the total weight of the polycarbonate-polysiloxane copolymer, in an amount effective to provide a total siloxane content of 0.5 wt% to 5.5 wt%, preferably 0.5 wt% to 4 wt%, based on the total weight of the blend; and
0.1 wt% to 0.5 wt% of the release agent.

The polycarbonate blend or molded article may further comprise a processing aid, a heat stabilizer, an antioxidant, an ultra violet light absorber, or a combination comprising at least one of the foregoing.

The polycarbonate blend may have a melt volume rate ("MVR"), determined in accordance with ISO 1133 under a load of 1.2 Kg at 300 °C, higher than 10 $cm^3/10$ min.

The polycarbonate blend may have a ductile/brittle transition temperature of less than or equal to 10 °C as determined in accordance with ISO 180-1A on a molded part having a thickness of 3 mm.

The polycarbonate blend or article may further comprise at least one impact modifier.

The polycarbonate blend or molded article may further comprise a flame retardant, an anti-drip agent, or a combination comprising at least one of the foregoing, wherein optionally the flame retardant comprises an alkali metal salt of a perfluorinated $C_1$-$C_{16}$ alkyl sulfonate, an inorganic acid complex salt, or a combination comprising at least one of the foregoing.

The polycarbonate blend or molded article may further comprise a filler composition.

The molded article can be a housing component of a consumer electronic device or an automotive bezel or reflector.

The molded article may be metallized.

The invention also provides a method of forming a molded article comprising:
injecting a composition into a mold, the composition comprising:

50 wt% to 98 wt%, preferably 70 wt% to 97.4 wt%, of one or more polycarbonates produced by a melt polymerization process,

2 wt% to 50 wt% of a polycarbonate-polysiloxane copolymer with a siloxane content of 10 wt% to 40 wt% based on the total weight of the polycarbonate-polysiloxane copolymer, in an amount effective to provide a total siloxane content of 0.5 wt% to 10 wt% based on the total weight of the blend, preferably 2.5 wt% to 30 wt% polycarbonate-polysiloxane copolymer with a siloxane content of 15 wt% to 25 wt% based on the total weight of the polycarbonate-polysiloxane copolymer, in an amount effective to provide a total siloxane content of 0.5 wt% to 5.5 wt% based on the total weight of the blend, wherein the polycarbonate blend has a release from mold ejection force that is at least 10% less than a substantially similar reference composition including polycarbonates produced by an interfacial polymerization process, and

optionally, 0.05 wt% to 1.0 wt% release agent, and

releasing the composition from the mold.

## BRIEF DESCRIPTION OF THE DRAWINGS

**FIG.** 1 shows an exemplary apparatus for determining mold ejection force according to an aspect of the disclosure.

**FIG.** 2 shows an exemplary apparatus for determining mold ejection force according to an aspect of the disclosure.

## DETAILED DESCRIPTION OF ILLUSTRATIVE EMBODIMENTS

For some applications in the market that required low temperature impact performance, blends of polycarbonate/polysiloxanes are used because compositions including these blends may have good flow, high impact and good aesthetics values in addition to very good release properties compared with normal polycarbonate. Current commercial products are based on a blend of interfacial polycarbonate and a polysiloxane copolymer in different ratios; depending on these ratios the properties of the final product, such as release performance, can vary.

It has been surprisingly found that blends including (i) a polycarbonate-siloxane copolymer having a siloxane content of 10 wt% to 40 wt% (or about 10 wt% to about 40 wt%) based on the total weight of the polycarbonate-polysiloxane, in an amount effective to provide a total siloxane content of 0.5 wt% to 10 wt% (or about 0.5 wt% to about 10 wt%) based on the total weight of the composition and (ii) melt polycarbonate have improved release properties, as measured via (a) ejection force or (b) release from mold coefficient of friction over substantially similar reference compositions including interfacial polycarbonate instead of melt polycarbonate.

As used herein, a "substantially similar reference composition" is a composition consisting essentially of the same amounts of the same components as the subject composition prepared under the same conditions within tolerance. However, the substantially similar reference composition may explicitly substitute certain components (e.g., interfacial polycarbonate in place of melt polycarbonate) as a demonstration of the comparative performance between the compared compositions.

## Polycarbonate Polymer

The terms "polycarbonate" or "polycarbonates" as used herein include copolycarbonates, homopolycarbonates, (co)polyester carbonates and combinations thereof.

The term polycarbonate can be further defined as compositions have repeating structural units of the formula (1):

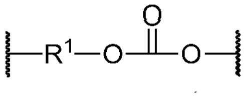
(1),

in which at least 60 percent of the total number of $R^1$ groups are aromatic organic radicals and the balance thereof are aliphatic, alicyclic, or aromatic radicals. In a further aspect, each $R^1$ is an aromatic organic radical and, in particular, a radical of the formula (2):

$$-A^1-Y^1-A^2- \quad (2),$$

wherein each of $A^1$ and $A^2$ is a monocyclic divalent aryl radical and $Y^1$ is a bridging radical having one or two atoms that separate $A^1$ from $A^2$. In various aspects, one atom separates $A^1$ from $A^2$. For example, radicals of this type include, but are not limited to, radicals such as -O-, -S-, -S(O) -, $-S(O_2)-$, -C(O) -, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical $Y^1$ may be a hydrocarbon group or a saturated hydrocarbon group such as methylene, cyclohexylidene, or isopropylidene. Polycarbonate materials include materials disclosed and described in U.S. Patent No. 7,786,246, which is cited for the specific purpose of disclosing various polycarbonate compositions and methods for manufacture of same. Polycarbonate polymers can be manufactured by means known to those skilled in the art.

Some polycarbonates are linear bisphenol-A polycarbonates produced by melt polymerization. The melt polycarbonate process is based on continuous reaction of a dihydroxy compound and a carbonate source in a molten stage. The reaction can occur in a series of reactors where the combined effect of catalyst, temperature, vacuum, and agitation allows for monomer reaction and removal of reaction by-products to displace the reaction equilibrium and effect polymer chain growth. A common polycarbonate made in melt polymerization reactions is derived from bisphenol A (BPA) via reaction with diphenyl carbonate (DPC). This reaction can be catalyzed by, for example, tetra methyl ammonium hydroxide (TMAOH) or tetrabutyl phosphonium acetate (TBPA), which can be added in to a monomer mixture prior to being introduced to a first polymerization unit and sodium hydroxide (NaOH), which can be added to the first reactor or upstream of the first reactor and after a monomer mixer.

The polycarbonates may be linear bisphenol-A polycarbonates produced by melt polymerization. The melt polycarbonate process is based on continuous reaction of a dihydroxy compound and a carbonate source in a molten stage. The reaction can occur in a series of reactors where the combined effect of catalyst, temperature, vacuum, and agitation allows for monomer reaction and removal of reaction by-products to displace the reaction equilibrium and effect polymer chain growth. A common polycarbonate made in melt polymerization reactions is derived from bisphenol A (BPA) via reaction with diphenyl carbonate (DPC). This reaction can be catalyzed by, for example, tetra methyl ammonium hydroxide (TMAOH) or tetrabutyl phosphonium acetate (TBPA), which can be added in to a monomer mixture prior to being introduced to a first polymerization unit and sodium hydroxide (NaOH), which can be added to the first reactor or upstream of the first reactor and after a monomer mixer.

The melt polycarbonate in some aspects may have a molecular weight (Mw) of about 15,000 to about 40,000 Dalton when measured using gel permeation chromatography (GPC) methods on a polycarbonate basis. The melt polycarbonate product may have an endcap level of about 45% to about 80% or 45 % to 80 %. Some polycarbonates have an endcap level of about 45% to about 75%, about 55 % to about 75%, about 60% to about 70% or about 60% to about 65%. In further examples, some polycarbonates have an endcap level of 45% to 75%, 55 % to 75%, 60% to 70% or 60% to 65%. Certain polycarbonates have at least 200 parts per million (ppm) of hydroxide groups. Certain polycarbonates have 200 ppm -1100 ppm or 950 ppm to 1050 ppm hydroxide groups.

The polycarbonate polymer may contain endcapping agents. Any suitable endcapping agents can be used provided that such agents do not significantly adversely impact the desired properties of the polycarbonate composition (transparency, for example). Endcapping agents include mono-phenolic compounds, mono-carboxylic acid chlorides, and/or mono-chloroformates. Mono-phenolic endcapping agents are exemplified by monocyclic phenols such as phenol and $C_1$-$C_{22}$ alkyl-substituted phenols such as p-cumyl-phenol, resorcinol monobenzoate, and p- and tertiary-butyl phenol; and monoethers of diphenols, such as p-methoxyphenol.

Additionally, some polycarbonates include from about 200 ppm to about 2000 ppm, or from about 250 ppm to about 1800 ppm Fries products. Fries products include ester type of structures A, B, and C.

Apart from the main polymerization reaction in polycarbonate production, there is a series of side reactions consisting of chain rearrangements of the polymer backbone that lead to branching that are often referred to as Fries rearrangement. The Fries species specifically found in bisphenol A melt polycarbonates include the ester type of structures A, B, and C.

A. Linear Fries:

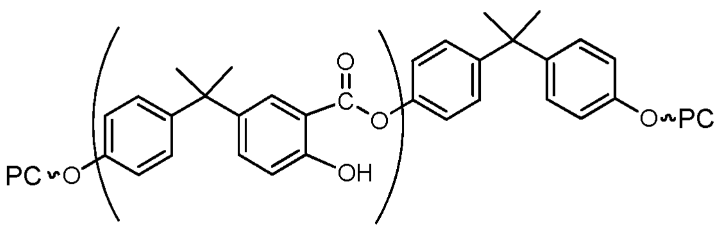

B. Branched Fries:

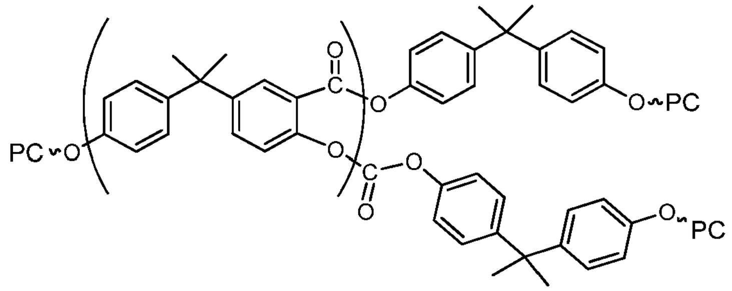

C. Acid Fries:

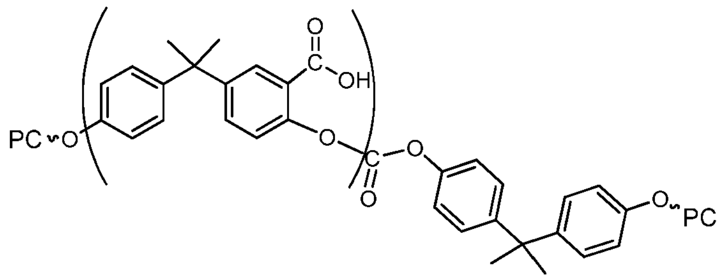

The Fries reaction is induced by the combined effect of basic catalysts, temperature, and residence time, which generally result in melt-produced polycarbonates being branched as compared with the interfacial polycarbonates since their manufacturing temperatures are lower. Because high branching levels in the resin can have a negative effect on the mechanical properties of the polycarbonate (for example, on impact strength), a product with lower branched Fries product may be desirable.

In some aspects the polycarbonate polymer is a linear bisphenol-A polycarbonate produced by a melt polymerization process. In other aspects the polycarbonate polymer is a linear bisphenol-A polycarbonate produced by an interfacial polymerization process.

In some compositions, the polycarbonate polymer comprises at least one polycarbonate polymer having a molecular weight (Mw) of at least 20,000 grams per mole (g/mol) and a second polycarbonate polymer have a molecular weight (Mw) of less than 20,000 g/mol. In some compositions, the molar ratio of said first polycarbonate polymer to said second polycarbonate polymer is about 1.4:1 to about 3.2:1. In other compositions, the molar ratio of said first polycarbonate polymer to said second polycarbonate polymer is about 1.5:1 to about 3.0:1.

In some compositions, an amount of polycarbonate made by an interfacial process may be used in addition to the polycarbonate made by a melt process. In some aspects, 0 wt% to 50 wt% or 1 wt% to 40 wt% or 5 to 20 wt% (or 0 wt% to about 50 wt% or about 1 wt% to about 40 wt% or about 5 to about 20 wt%) of one or more polycarbonates produced by an interfacial polymerization process may be present in an amount based on the total amount of polycarbonate.

**Polycarbonate-Polysiloxane Copolymer**

As used herein, the term "polycarbonate-polysiloxane copolymer" is equivalent to polysiloxane-polycarbonate copolymer, polycarbonate-polysiloxane polymer, or polysiloxane-polycarbonate polymer. In various aspects, the polycarbonate-polysiloxane copolymer can be a block copolymer comprising one or more polycarbonate blocks and one or more polysiloxane blocks. In some aspects, the polysiloxane-polycarbonate copolymer comprises polydiorganosiloxane blocks comprising structural units of the general formula (3) below:

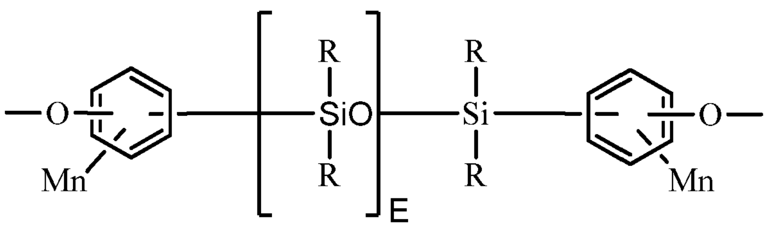
(3)

wherein the polydiorganosiloxane block length (E) is from 5 to 200, preferably 20 to 100, more preferably 30 to 50; wherein

each R group can be the same or different, and is selected from a $C_{1-13}$ monovalent organic group; wherein each M can be the same or different, and is selected from a halogen, cyano, nitro, $C_1$-$C_8$ alkylthio, $C_1$-$C_8$ alkyl, $C_1$-$C_8$ alkoxy, $C_2$-$C_8$ alkenyl, $C_2$-$C_8$ alkenyloxy group, $C_3$-$C_8$ cycloalkyl, $C_3$-$C_8$ cycloalkoxy, $C_6$-$C_{10}$ aryl, $C_6$-$C_{10}$ aryloxy, $C_7$-$C_{12}$ aralkyl, $C_7$-$C_{12}$aralkoxy, $C_7$- $C_{12}$ alkylaryl, or $C_7$- $C_{12}$ alkylaryloxy, and where each n is independently 0, 1, 2, 3, or 4. The polysiloxane-polycarbonate copolymer also comprises polycarbonate blocks comprising structural units of the general formula (4) below:

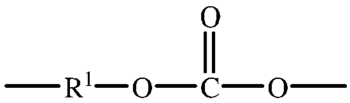
(4)

wherein at least 60 percent of the total number of $R^1$ groups comprise aromatic moieties and the balance thereof comprise aliphatic, alicyclic, or aromatic moieties.

Certain polycarbonate-polysiloxane resins comprise allylphenol capped siloxanes. Such resins comprise the structure of the general formula (5) below:

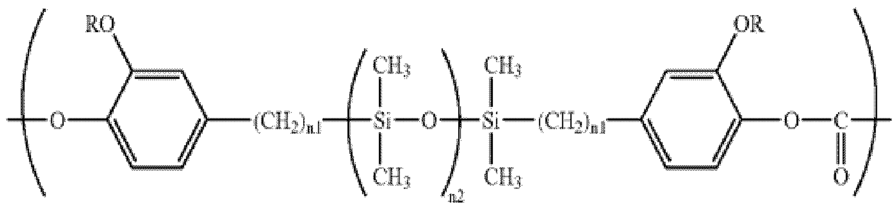
(5)

where R is an alkyl group having 1-3 carbon atoms, n1 is an integer of from 2 to 4 and n2 is an integer of from 1 to 200. Polycarbonate-polysiloxane copolymers comprising such structures can be found in European Patent Application No. 1757634.

Certain polysiloxane-polycarbonates materials include materials disclosed and described in U.S. Patent No. 7,786,246.

The polycarbonate-siloxane copolymer comprises about 10 wt% to about 40 wt% (or 10 wt% to 40 wt%) siloxane. In particular aspects, the polycarbonate-siloxane copolymer comprises about 15 to about 25 wt% siloxane. Certain polycarbonate-polysiloxane copolymers have a polydiorganosiloxane block having from about 20 to about 60 diorganosiloxane units. The polycarbonate-siloxane copolymer is present in an amount effective to provide a total siloxane content of 0.5 wt% to 10 wt% or of about 0.5 wt% to about 10 wt. % based on the total weight of the composition.

## Release Agent

Examples of mold release agents include both aliphatic and aromatic carboxylic acids and their alkyl esters, for example, stearic acid, behenic acid, pentaerythritol stearate, glycerin tristearate, and ethylene glycol distearate. Polyolefins such as high-density polyethylene, linear low-density polyethylene, low-density polyethylene, and similar polyolefin homopolymers and copolymers can also be used a mold release agents.

Some compositions use pentaerythritol stearate, glycerol monostearate, a wax or a poly-alpha-olefin.

Mold release agents are optional but are often used to facilitate release of the article from the mold. Mold release agents are typically present in the composition at 0.05 wt% to 1 wt% or about 0.05 wt% to about 1 wt%, based on total weight of the composition, and in particular aspects from 0.1 wt% to 0.7 wt% or about 0.1 to about 0.7 wt%, from 0.1 wt% to 0.5 wt% or about 0.1 wt% to about 0.5 wt%, or from 0.1 wt% to 0.4 wt% or about 0.1 wt% to about 0.4 wt%. Particular aspects have less than 0.3 wt%, or even less than 0.2 wt% release agent.

In some aspects the mold release agents will have high molecular weight, typically greater than 300, to prevent loss of the release agent from the molten polymer mixture during melt processing.

## Additional Components

The additive composition can include an impact modifier, flow modifier, antioxidant, heat stabilizer, light stabilizer, ultraviolet (UV) light stabilizer, UV absorbing additive, plasticizer, lubricant, antistatic agent, anti-fog agent, antimicrobial agent, colorant (e.g., a dye or pigment), surface effect additive, radiation stabilizer, anti-drip agent (e.g., a PTFE-encapsulated styrene-acrylonitrile copolymer (TSAN)), or a combination comprising one or more of the foregoing. For example, a combination of a heat stabilizer and ultraviolet light stabilizer can be used. In general, the additives are used in

the amounts generally known to be effective. For example, the total amount of the additive composition can be from 0.001 wt% to 10.0 wt% or about 0.001 to about 10.0 wt%, or from 0.01 wt% to 5 wt% or about 0.01 to about 5 wt%, each based on the total weight of all ingredients in the composition.

The composition can include various additives ordinarily incorporated into polymer compositions of this type, with the proviso that the additive(s) are selected so as to not significantly adversely affect the desired properties of the thermoplastic composition (good compatibility for example). Such additives can be mixed at a suitable time during the mixing of the components for forming the composition.

Examples of impact modifiers include natural rubber, fluoroelastomers, ethylene-propylene rubber (EPR), ethylene-butene rubber, ethylene-propylene-diene monomer rubber (EPDM), acrylate rubbers, hydrogenated nitrile rubber (HNBR), silicone elastomers, styrene-butadiene-styrene (SBS), styrene-butadiene rubber (SBR), styrene-(ethylene-butene)-styrene (SEBS), acrylonitrile-butadiene-styrene (ABS), acrylonitrile-ethylene-propylene-diene-styrene (AES), styrene-isoprene-styrene (SIS), styrene-(ethylene-propylene)-styrene (SEPS), methyl methacrylate-butadiene-styrene (MBS), high rubber graft (HRG), and the like. Some suitable impact modifies include PC(polycarbonate)/ABS (such as Cycoloy PC/ABS) and MBS type formulations.

Heat stabilizer additives include organophosphites (e.g. triphenyl phosphite, tris-(2,6-dimethylphenyl)phosphite, tris-(mixed mono-and di-nonylphenyl)phosphite or the like), phosphonates (e.g., dimethylbenzene phosphonate or the like), phosphates (e.g., trimethyl phosphate, or the like), or combinations comprising at least one of the foregoing heat stabilizers. The heat stabilizer can be tris(2,4-di-t-butylphenyl) phosphate available as Irgafos™ 168. Heat stabilizers are generally used in amounts of from 0.01 wt% to 5 wt% or about 0.01 wt% to about 5 wt%, based on the total weight of polymer in the composition.

There is considerable overlap among plasticizers, lubricants, and mold release agents, which include, for example, glycerol tristearate (GTS), phthalic acid esters (e.g., octyl-4,5-epoxy-hexahydrophthalate), tris-(octoxycarbonylethyl)isocyanurate, tristearin, di- or polyfunctional aromatic phosphates (e.g., resorcinol tetraphenyl diphosphate (RDP), the bis(diphenyl) phosphate of hydroquinone and the bis(diphenyl) phosphate of bisphenol A); poly-alpha-olefins; epoxidized soybean oil; silicones, including silicone oils (e.g., poly(dimethyl diphenyl siloxanes); esters, for example, fatty acid esters (e.g., alkyl stearyl esters, such as, methyl stearate, stearyl stearate, and the like), polyethylene, waxes (e.g., beeswax, montan wax, paraffin wax, or the like), or combinations comprising at least one of the foregoing plasticizers, lubricants, and mold release agents. These are generally used in amounts of from about 0.01 to about 5 wt%, based on the total weight of the polymer in the composition.

Light stabilizers, in particular ultraviolet light (UV) absorbing additives, also referred to as UV stabilizers, include hydroxybenzophenones (e.g., 2-hydroxy-4-n-octoxy benzophenone), hydroxybenzotriazines, cyanoacrylates, oxanilides, benzoxazinones (e.g., 2,2'-(1,4- phenylene)bis(4H-3,1-benzoxazin-4-one, commercially available under the trade name CYASORB UV-3638 from Cytec), aryl salicylates, hydroxybenzotriazoles (e.g., 2-(2-hydroxy-5-methylphenyl) benzotriazole, 2-(2-hydroxy-5-tert-octylphenyl)benzotriazole, and 2-(2H-benzotriazol-2-yl)-4-(1,1,3,3-tetramethylbutyl)-phenol, commercially available under the trade name CYASORB 5411 from Cytec) or combinations comprising at least one of the foregoing light stabilizers. The UV stabilizers can be present in an amount of from about 0.01 to about 1 wt%, specifically, from 0.1 wt% to 0.5 wt% or about 0.1 to about 0.5 wt%, and more specifically, from 0.15 wt% to 0.4 wt% or about 0.15 to about 0.4 wt%, based upon the total weight of polymer in the composition.

Antioxidant additives include organophosphites such as tris(nonyl phenyl)phosphite, tris(2,4-di-t-butylphenyl) phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or combinations comprising at least one of the foregoing antioxidants. Antioxidants are used in amounts of from 0.01 parts by weight to 0.1 parts by weight or about 0.01 to about 0.1 parts by weight, based on 100 parts by weight of the total composition, excluding any filler.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. A TSAN comprises about 50 wt% PTFE and about 50 wt% SAN, based on the total weight of the encapsulated fluoropolymer. The SAN can comprise, for example, about 75 wt% styrene and about 25 wt% acrylonitrile based on the total weight of the copolymer. Antidrip agents can be used in amounts of 0.01 parts by weight to 0.1 parts by weight or about 0.1 to about 10 parts by weight, based on 100 parts by weight of the total composition, excluding any filler.

The polycarbonate compositions may optionally include flame retardants. Various types of flame retardants can

be utilized. In one aspect, the flame retardant additives include, for example, flame retardant salts such as alkali metal salts of perfluorinated C1-C16 alkyl sulfonates such as potassium perfluorobutane sulfonate (Rimar salt), potassium perfluoroctane sulfonate, tetraethylammonium perfluorohexane sulfonate, potassium diphenylsulfone sulfonate (KSS), and the like, sodium benzene sulfonate, sodium toluene sulfonate (NATS) and the like; and salts formed by reacting for example an alkali metal or alkaline earth metal (for example lithium, sodium, potassium, magnesium, calcium and barium salts) and an inorganic acid complex salt, for example, an oxo-anion, such as alkali metal and alkaline-earth metal salts of carbonic acid, such as sodium carbonate $Na_2CO_3$, potassium carbonate $K_2CO_3$, magnesium carbonate $MgCO_3$, calcium carbonate $CaCO_3$, and barium carbonate $BaCO_3$ or fluoro-anion complex such as lithium hexafluoroaluminate $Li_3AlF_6$, barium hexafluorosilicate $BaSiF_6$, potassium tetrafluoroborate $KBF_4$, potassium hexafluoroaluminate $K_3AlF_6$, potassium tetrafluoroaluminate $KAlF_4$, potassium hexafluorosilicate $K_2SiF_6$, and/or sodium hexafluoroaluminate $Na_3AlF_6$ or the like. Rimar salt and KSS and NATS, alone or in combination with other flame retardants, are particularly useful in the compositions disclosed herein.

The polycarbonate compositions can optionally include a colorant composition containing pigment and/or dye additives. Useful pigments can include, for example, inorganic pigments such as metal oxides and mixed metal oxides such as zinc oxide, titanium dioxides, iron oxides, or the like; sulfides such as zinc sulfides, or the like; aluminates; sodium sulfo-silicates sulfates, chromates, or the like; carbon blacks; zinc ferrites; ultramarine blue; organic pigments such as azos, di-azos, quinacridones, perylenes, naphthalene tetracarboxylic acids, flavanthrones, isoindolinones, tetrachloroisoindolinones, anthraquinones, enthrones, dioxazines, phthalocyanines, and azo lakes; Pigment Red 101, Pigment Red 122, Pigment Red 149, Pigment Red 177, Pigment Red 179, Pigment Red 202, Pigment Violet 29, Pigment Blue 15, Pigment Blue 60, Pigment Green 7, Pigment Yellow 119, Pigment Yellow 147, Pigment Yellow 150, and Pigment Brown 24; or combinations comprising at least one of the foregoing pigments.

Dyes are generally organic materials and include coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly (C2-8) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores such as anti-stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3"",5""-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene, chrysene, rubrene, coronene, or the like; or combinations comprising at least one of the foregoing dyes.

The composition can have any suitable color including white, gray, light gray, black, and the like. The white or light gray color can exhibit an L* value greater than or equal to 80. A composition having a white or light gray color can comprise an amount of titanium dioxide in amounts of 0.1 wt% to 30 wt% or about 0.1 wt% to about 30 wt%, 0.1 wt% to 25 wt% or about 0.1 wt% to about 25 wt%, 0.1 wt% to 20 wt% or about 0.1 wt% to about 20 wt%, or 0.1 wt% to 15 wt% or about 0.1 wt% to about 15 wt%, each based on the total weight of the polycarbonate composition.

The gray or black color can exhibit an L* value of below 80. A composition having a gray or black color can comprise an amount of carbon black of greater than zero and less than 1.5 wt% based on the total weight of the colorant composition. In an aspect, a molded sample having a thickness of 1 mm and comprising the composition has an average L* value of 29 or less as measure by the CIE Lab method, 10 degree observer, D65 illuminant, specular component included, measured in reflectance mode.

**Polymer Mixtures**

The polymer compositions can be formed by techniques known to those skilled in the art. Extrusion and mixing techniques, for example, may be utilized to combine the components of the polymer composition.

The polymer composition may comprise (i) about 50 wt% to about 98 wt% of polycarbonate, (ii) about 2 wt% to about 50 wt% of a polycarbonate-polysiloxane copolymer with a siloxane content of about 10 wt% to about 40 wt% based on the total weight of the polycarbonate-polysiloxane, in an amount effective to provide a total siloxane content of about 0.5 wt% to about 10 wt% based on the total weight of the composition, and 0 to about 0.1 wt% or about 0.1 wt% to about 1.0 wt%

of at least one release agent. Some polymer compositions may comprise (i) about 69.5 wt% to about 97.9 wt% of polycarbonate, (ii) about 2.0 wt% to about 30 wt% of a polycarbonate-polysiloxane copolymer, and about 0.1 wt% to about 0.5 wt% of at least one release agent. Certain polymer compositions comprise about (i) 74.7 wt% to about 97.4 wt% polycarbonate; (ii) about 2.5 wt% to about 25 wt% polycarbonate-polysiloxane copolymer; and (iii) about 0.1 wt% to about 0.3 wt% release agent.

In some aspects, the composition has a siloxane content of about 0.5 to about 4 wt% based on the total composition. In other aspects, the composition has a siloxane content of 1 wt% to 2 wt% or about 1 wt% to about 2 wt % based on the total composition.

The polymer mixtures of the instant disclosure may have a melt flow volume rate (MVR) of at least 10 or 20 or 30 or 35 or 40 $cm^3$/10 min or at least 30 $cm^3$/10 min when measured according to ISO 1133 at 300 °C and 1.2 Kg.

Polymer compositions/molded articles formed according to the present disclosure may be used in any number of applications. Suitable applications include, but are not limited to:

components of a consumer electronic device selected from a gaming console, a gaming controller, a portable gaming device, a cellular telephone, a television, a personal computer, a tablet computer, a laptop computer, a personal digital assistant, a portable media player, a digital camera, a portable music player, an appliance, a power tool, a robot, a toy, a greeting card, a home entertainment system, and active loudspeaker, or a soundbar;

or an electronic housing for an adapter, a cell phone, a smart phone, a GPS device, a laptop computer, a tablet computer, an e-reader, a copier, or a solar apparatus;

or an electrical junction box, an electrical connector, an electrical vehicle charger, an outdoor electrical enclosure, a smart meter enclosure, a smart grid power node, a photovoltaic frame, a miniature circuit breaker;

or an automotive, scooter, and motorcycle exterior and interior component comprising panels, quarter panels, rocker panels, trim, fenders, battery covers, doors, deck-lids, trunk lids, hoods, bonnets, roofs, bumpers, fascia, grilles, mirror housings, pillar appliqués, cladding, body side moldings, wheel covers, hubcaps, door handles, spoilers, window frames, headlamp bezels, headlamps, tail lamps, tail lamp housings, tail lamp bezels, license plate enclosures, roof racks, and running boards.

**Definitions**

It is to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural equivalents unless the context clearly dictates otherwise. Thus, for example, reference to "a polycarbonate polymer" includes mixtures of two or more polycarbonate polymers.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed. When more than one range for a particular value is disclosed, the ranges are combinable to form additional aspects.

As used herein, the terms "about" and "at or about" mean that the amount or value in question can be the designated value, approximately the designated value, or about the same as the designated value. It is generally understood, as used herein, that it is the nominal value indicated $\pm$5% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed

herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight, of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

As used herein the terms "weight percent," "weight %," and "wt%" of a component, which can be used interchangeably, unless specifically stated to the contrary, are based on the total weight of the formulation or composition in which the component is included. For example if a particular element or component in a composition or article is said to have 8% by weight, it is understood that this percentage is relative to a total compositional percentage of 100% by weight.

As used herein, the terms "weight average molecular weight" or "Mw" can be used interchangeably, and are defined by the formula:

$$M_w = \frac{\sum N_i M_i^{\,2}}{\sum N_i M_i},$$

where Mi is the molecular weight of a chain and Ni is the number of chains of that molecular weight. Mw can be determined for polymers, e.g., polycarbonate polymers, by methods well known to a person having ordinary skill in the art using molecular weight standards, e.g. polycarbonate standards or polystyrene standards, and in particular certified or traceable molecular weight standards. Polystyrene basis refers to measurements using a polystyrene standard.

The term "siloxane" refers to a segment having a Si-O-Si linkage.

The term "flowable" means capable of flowing or being flowed. Typically a polymer is heated such that it is in a melted state to become flowable.

"Interfacial polycarbonate" is produced by a process where typically the disodium salt of bisphenol A (BPA) is dissolved in water and reacted with phosgene which is typically dissolved in a solvent that not miscible with water.

"Melt polycarbonate" is produced by a process where BPA reacts with diphenyl carbonate (DPC) in a molten state without the solvent.

Melt Volume Flow Rate (MVR) is measured according to ISO 1133 at 300 °C and 1.2 Kg.

Izod Notched Impact tests are performed according to ISO 180-1A.

Ejection force may be measured by injection molding sleeves in a core and then measuring the force necessary to remove the sleeve from the core. For example, ejection force of a molded article comprising the polycarbonate blend may be evaluated by injection molding a sleeve in a core and determining the force necessary to remove the sleeve from the core. At the opening of the mold, the sleeve remains on the core due to the material contraction. At the end of the opening stroke, the ejector pins detach the sleeve from the core. The force applied to the sleeve for demolding is measured as the ejection force. The surface temperature of the sleeve is kept constant so that an accurate comparison of ejection forces can be made. A mold 100 comprising a sleeve 102 and sprue 104 suitable for use in determining ejection force is shown in **FIG. 1.** The sleeve 102 is presented with the core 106 disposed therein. Ejection force, or mold release force (FR), for demolding may be determined according to equation (1):

$$\mathrm{FR} = \mathrm{Cf} \cdot \mathrm{FN} \qquad (1)$$

where Cf is the coefficient of friction between the sleeve and the core while FN refers to the normal force applied on the core due to shrinkage.

Dimensions of the sleeve shown in FIG. 2 are in millimeters (mm) for the sleeve 202 configured to the sprue 204. Ejection force can be measured with a composition formed into the exemplary sleeve/mold of FIG. 2. It should be noted that

other sleeves/molds with other dimensions could be used for comparing the compositions of the disclosure to the reference compositions. In further aspects, ejection force may be measured according to UL410.

Measurement process parameters are as follows.

| | |
|---|---|
| **Melt temperature** | 300 °C |
| **Surface temperature of the core** | 95 °C |
| **Ejection speed** | 70 mm/second (s) |
| **Cycle time** | 20.1 s |
| **Overall cooling time** | 13.6 s |
| **Pre-drying** | 120 °C, 4 hours (h) |
| **Max. injection pressure** | 1000 bar |
| **Injection speed** | 25 $cm^3$/s |
| **Changeover pressure** | 100 bar |
| **Temperature injection plate** | 89 °C |
| **Temperature ejection plate** | 97 °C |

The term "metalized" means that the article or molded part is partially or fully coated with a metal. The coating may be made by any means known in the art.

## Aspects

The present disclosure comprises at least the following aspects.

Aspect 1. A polycarbonate blend comprising: about 50 wt% to about 98 wt% of one or more polycarbonates produced by a melt polymerization process; about 2.0 wt% to about 50 wt% of a polycarbonate-polysiloxane copolymer with a siloxane content of about 10 wt% to about 40 wt% based on the total weight of the polycarbonate-polysiloxane copolymer, in an amount effective to provide a total siloxane content of about 0.5 wt% to about 10 wt% based on the total weight of the polycarbonate blend; 0 wt% to about 1.0 wt% release agent; wherein the polycarbonate blend has a release from mold ejection force that is at least about 10% less than a substantially similar reference blend including only polycarbonates produced by an interfacial polymerization process.

Aspect 2. A polycarbonate blend comprising: about 50 wt% to about 98 wt% of one or more polycarbonates produced by a melt polymerization process; about 2.0 wt% to about 50 wt% of a polycarbonate-polysiloxane copolymer with a siloxane content of about 10 wt% to about 40 wt% based on the total weight of the polycarbonate-polysiloxane copolymer, in an amount effective to provide a total siloxane content of about 0.5 wt% to about 10 wt% based on the total weight of the polycarbonate blend; 0 wt% to about 1.0 wt% release agent; wherein the polycarbonate blend having a release from mold coefficient of friction that is at least about 10% less than a substantially similar reference composition including only polycarbonates produced by an interfacial polymerization process.

Aspect 3. A polycarbonate blend comprising: 50 wt% to 98 wt% of one or more polycarbonates produced by a melt polymerization process; 2.0 wt% to 50 wt% of a polycarbonate-polysiloxane copolymer with a siloxane content of 10 wt% to 40 wt% based on the total weight of the polycarbonate-polysiloxane copolymer, in an amount effective to provide a total siloxane content of 0.5 wt% to 10 wt% based on the total weight of the polycarbonate blend; 0 wt% to 1.0 wt% release agent; wherein the polycarbonate blend has a release from mold ejection force that is at least 10% less than a substantially similar reference blend including only polycarbonates produced by an interfacial polymerization process.

Aspect 4. A polycarbonate blend comprising: 50 wt% to 98 wt% of one or more polycarbonates produced by a melt polymerization process; 2.0 wt% to 50 wt% of a polycarbonate-polysiloxane copolymer with a siloxane content of 10 wt% to 40 wt% based on the total weight of the polycarbonate-polysiloxane copolymer, in an amount effective to provide a total siloxane content of 0.5 wt% to about 10 wt% based on the total weight of the polycarbonate blend; 0 wt% to 1.0 wt% release agent; wherein the polycarbonate blend having a release from mold coefficient of friction that is at least 10% less than a substantially similar reference composition including only polycarbonates produced by an interfacial polymerization process.

Aspect 5. A polycarbonate blend consisting essentially of: about 50 wt% to about 98 wt% of one or more polycarbonates produced by a melt polymerization process; about 2.0 wt% to about 50 wt% of a polycarbonate-polysiloxane copolymer with a siloxane content of about 10 wt% to about 40 wt% based on the total weight of the polycarbonate-polysiloxane copolymer, in an amount effective to provide a total siloxane content of about 0.5 wt% to about

10 wt% based on the total weight of the polycarbonate blend; 0 wt% to about 1.0 wt% release agent; wherein the polycarbonate blend has a release from mold ejection force that is at least about 10% less than a substantially similar reference blend including only polycarbonates produced by an interfacial polymerization process.

Aspect 6. A polycarbonate blend consisting essentially of: about 50 wt% to about 98 wt% of one or more polycarbonates produced by a melt polymerization process; about 2.0 wt% to about 50 wt% of a polycarbonate-polysiloxane copolymer with a siloxane content of about 10 wt% to about 40 wt% based on the total weight of the polycarbonate-polysiloxane copolymer, in an amount effective to provide a total siloxane content of about 0.5 wt% to about 10 wt% based on the total weight of the polycarbonate blend; 0 wt% to about 1.0 wt% release agent; wherein the polycarbonate blend having a release from mold coefficient of friction that is at least about 10% less than a substantially similar reference composition including only polycarbonates produced by an interfacial polymerization process.

Aspect 7. A polycarbonate blend consisting of: about 50 wt% to about 98 wt% of one or more polycarbonates produced by a melt polymerization process; about 2.0 wt% to about 50 wt% of a polycarbonate-polysiloxane copolymer with a siloxane content of about 10 wt% to about 40 wt% based on the total weight of the polycarbonate-polysiloxane copolymer, in an amount effective to provide a total siloxane content of about 0.5 wt% to about 10 wt% based on the total weight of the polycarbonate blend; 0 wt% to about 1.0 wt% release agent; wherein the polycarbonate blend has a release from mold ejection force that is at least about 10% less than a substantially similar reference blend including only polycarbonates produced by an interfacial polymerization process.

Aspect 8. A polycarbonate blend consisting of: about 50 wt% to about 98 wt% of one or more polycarbonates produced by a melt polymerization process; about 2.0 wt% to about 50 wt% of a polycarbonate-polysiloxane copolymer with a siloxane content of about 10 wt% to about 40 wt% based on the total weight of the polycarbonate-polysiloxane copolymer, in an amount effective to provide a total siloxane content of about 0.5 wt% to about 10 wt% based on the total weight of the polycarbonate blend; 0 wt% to about 1.0 wt% release agent; wherein the polycarbonate blend having a release from mold coefficient of friction that is at least about 10% less than a substantially similar reference composition including only polycarbonates produced by an interfacial polymerization process.

Aspect 9. A molded article comprising the polycarbonate blend of any one of aspects 1-8.

Aspect 10. The polycarbonate blend or molded article of any one of Aspects 1-9 having a siloxane content of about 0.5 to 4 wt% based on the total weight of the polycarbonate blend or molded article.

Aspect 11. The polycarbonate blend or molded article of any one of Aspects 1-9 having a siloxane content of 0.5 to 4 wt% based on the total weight of the polycarbonate blend or molded article.

Aspect 12. The molded article of any one of Aspects 1-11 having an ejection force of less than 600 N, when ejection force of a molded article comprising the polycarbonate blend is evaluated by injection molding a sleeve in a core and determining the force necessary to remove the sleeve from the core.

Aspect 13. The molded article of any one of Aspects 9-12having (i) an ejection force of less than 600 Newton (N), preferably less than 450 N, more preferably less than 350 N and (ii) a release from mold coefficient of friction of less than 20, preferably less than 17 and more preferably less than 14, as measured by UL410.

Aspect 14. The polycarbonate blend or molded article of any one of Aspects 1-13, wherein the poly(carbonate-siloxane) copolymer comprises bisphenol carbonate units of the formula

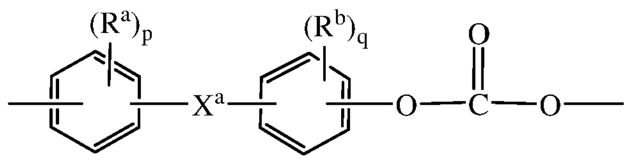

wherein

$R^a$ and $R^b$ are each independently $C_{1-12}$ alkyl, $C_{1-12}$ alkenyl, $C_{3-8}$ cycloalkyl, or $C_{1-12}$ alkoxy,
p and q are each independently 0 to 4, and
$X^a$ is a single bond, -O-, -S-, -S(O)-, $-S(O)_2-$, -C(O)-, a $C_{1-11}$ alkylidene of formula $-C(R^c)(R^d)$ - wherein $R^c$ and $R^d$ are each independently hydrogen or $C_{1-10}$ alkyl, or a group of the formula $-C(=R^e)-$ wherein $R^e$ is a divalent $C_{1-10}$ hydrocarbon group; and
siloxane units of the formulas

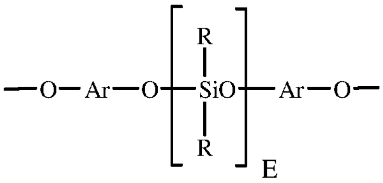
,
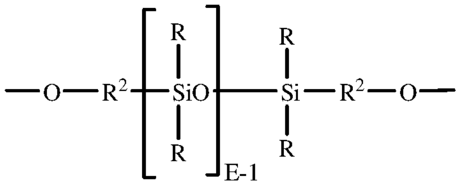
,

or a combination comprising at least one of the foregoing, wherein

R is each independently a $C_{1-13}$ monovalent hydrocarbon group,
Ar is each independently a $C_{6-30}$ aromatic group,
$R^2$ is each independently a $C_{2-8}$ alkylene group, and
E has an average value of 10 to 200.

Aspect 15. The polycarbonate blend or molded article of any one of Aspects 1-14, wherein the blend has a Fries number of about 200 ppm or higher or 400 ppm or higher or 600 ppm or higher or 800 ppm or higher based on the total composition.

Aspect 16. The polycarbonate blend or molded article of any one of Aspects 1-14, wherein the blend has a Fries number of 200 ppm or higher or 400 ppm or higher or 600 ppm or higher or 800 ppm or higher based on the total composition.

Aspect 17. The polycarbonate blend or molded article of any one of Aspects 1-16, wherein the blend or article comprises: about 70 wt% to about 97.4 wt% polycarbonate; about 2.5 wt% to about 30 wt% polycarbonate-polysiloxane copolymer with a siloxane content of about 15 wt% to about 25 wt% based on the total weight of the polycarbonate-polysiloxane, in an amount effective to provide a total siloxane content of about 0.5 wt% to about 5.5 wt% based on the total weight of the composition; and about 0.1 wt% to about 0.5 wt% release agent.

Aspect 18. The polycarbonate blend or molded article of any one of Aspects 1-17, wherein the blend or article comprises: 70 wt% to 97.4 wt% polycarbonate; 2.5 wt% to 30 wt% polycarbonate-polysiloxane copolymer with a siloxane content of 15 wt% to 25 wt% based on the total weight of the polycarbonate-polysiloxane, in an amount effective to provide a total siloxane content of 0.5 wt% to 5.5 wt% based on the total weight of the composition; and 0.1 wt% to 0.5 wt% release agent.

Aspect 19. The polycarbonate blend or molded article of any one of Aspects 1-18, additionally comprising a processing aid, a heat stabilizer, an antioxidant, an ultra violet light absorber, or a combination comprising at least one of the foregoing.

Aspect 20. The polycarbonate blend or molded article of any one of Aspects 1-19, wherein the release agent is present in an amount of about 0.5 wt% or less or about 0.4 wt% or less.

Aspect 21. The polycarbonate blend or molded article of any one of Aspects 1-20, wherein the blend or article has a siloxane content of about 0.5 to about 4 wt%, or of about 1.0 to about 2.5 wt% based on the total weight of the composition.

Aspect 22. The polycarbonate blend or molded article of any one of Aspects 1-20, wherein the blend or article has a siloxane content of 0.5 to 4 wt%, or of 1.0 to 2.5 wt% based on the total weight of the composition.

Aspect 23. The polycarbonate blend or molded article of any one of Aspects 1-22, wherein the polycarbonate blend has a melt volume rate ("MVR"), determined in accordance with ISO 1133 under a load of 1.2 Kg at 300 °C, higher than 10 or higher than 20 or higher than 30 or higher than 40.

Aspect 24. The polycarbonate blend or molded article of any one of Aspects 1-23, wherein the polycarbonate blend has a ductile/brittle transition temperature of less than or equal to 10 °C or less than or equal to 0 °C, or less than or equal to -10 °C, or less than or equal to -20 °C as determined in accordance with ISO 180-1A on a molded part having a thickness of 3 mm.

Aspect 25. The polycarbonate blend or molded article of any one of Aspects 1-13, wherein the release agent comprises one or more of pentaerythritol stearate, glycerol monostearate and poly-alpha-olefin.

Aspect 26. The polycarbonate blend or molded article of any one of Aspects 1-25, wherein the blend or article additionally comprises at least one impact modifier.

Aspect 27. The polycarbonate blend or molded article of any one or more of Aspects 1-26, further comprising a flame retardant, an anti-drip agent, or a combination comprising at least one of the foregoing, wherein optionally the flame retardant comprising an alkali metal salt of a perfluorinated $C_1$-$C_{16}$ alkyl sulfonate, an inorganic acid complex salt, or a combination comprising at least one of the foregoing.

Aspect 28. The polycarbonate blend or molded article of any one or more of Aspects 1-27, further comprising a filler composition.

Aspect 29. The polycarbonate blend or molded article of any one of Aspects 1-28, additionally comprising 0 wt%

to 50 wt% of one or more polycarbonates produced by an interfacial polymerization process present in a ratio of 50% or less based on the total amount of polycarbonate.

Aspect 30. The polycarbonate blend or molded article of any one of Aspects 1-28, additionally comprising 0 wt% to about 50 wt% of one or more polycarbonates produced by an interfacial polymerization process present in a ratio of 50% or less based on the total amount of polycarbonate.

Aspect 31. The molded article of any one of Aspects 3-189-30 wherein the molded article is a component of a consumer electronic device selected from a gaming console, a gaming controller, a portable gaming device, a cellular telephone, a television, a personal computer, a tablet computer, a laptop computer, a personal digital assistant, a portable media player, a digital camera, a portable music player, an appliance, a power tool, a robot, a toy, a greeting card, a home entertainment system, and active loudspeaker, or a soundbar,

> or the article is an electronic housing for an adapter, a cell phone, a smart phone, a GPS device, a laptop computer, a tablet computer, an e-reader, a copier, or a solar apparatus,
> or the article is an electrical junction box, an electrical connector, an electrical vehicle charger, an outdoor electrical enclosure, a smart meter enclosure, a smart grid power node, a photovoltaic frame, a miniature circuit breaker,
> or the article is an automotive, scooter, and motorcycle exterior and interior component comprising panels, quarter panels, rocker panels, trim, fenders, battery covers, doors, deck-lids, trunk lids, hoods, bonnets, roofs, bumpers, fascia, grilles, mirror housings, pillar appliqués, cladding, body side moldings, wheel covers, hubcaps, door handles, spoilers, window frames, headlamp bezels, headlamps, tail lamps, tail lamp housings, tail lamp bezels, license plate enclosures, roof racks, and running boards.

Aspect 32. The molded article of any one of Aspects 9-30, wherein the article is a housing of a consumer electronic device or an automotive bezel or automotive reflector.

Aspect 33. The molded article of any one of Aspects 9-30, wherein the article is metallized.

Aspect 34. A method of forming a molded article comprising: injecting a composition into a mold, the composition comprising: about 50 wt% to about 98 wt% of one or more polycarbonates produced by a melt polymerization process; about 2.0 wt% to about 50 wt% of a polycarbonate-polysiloxane copolymer with a siloxane content of about 10 wt% to about 40 wt% based on the total weight of the polycarbonate-polysiloxane, in an amount effective to provide a total siloxane content of about 0.5 wt% to about 10 wt% based on the total weight of the composition; 0 wt% to about 1.0 wt% release agent; wherein the polycarbonate blend has a release from mold ejection force that is at least about 10% less than a substantially similar reference composition including only polycarbonates produced by an interfacial polymerization process, and releasing the composition from the mold.

Aspect 35. A method of forming a molded article comprising: injecting a composition into a mold, the composition comprising: 50 wt% to 98 wt% of one or more polycarbonates produced by a melt polymerization process; 2.0 wt% to 50 wt% of a polycarbonate-polysiloxane copolymer with a siloxane content of 10 wt% to 40 wt% based on the total weight of the polycarbonate-polysiloxane, in an amount effective to provide a total siloxane content of 0.5 wt% to 10 wt% based on the total weight of the composition; 0 wt% to 1.0 wt% release agent; wherein the polycarbonate blend has a release from mold ejection force that is at least 10% less than a substantially similar reference composition including only polycarbonates produced by an interfacial polymerization process, and releasing the composition from the mold.

Aspect 36. A method of forming a molded article comprising: injecting a composition into a mold, the composition consisting essentially of: about 50 wt% to about 98 wt% of one or more polycarbonates produced by a melt polymerization process; about 2.0 wt% to about 50 wt% of a polycarbonate-polysiloxane copolymer with a siloxane content of about 10 wt% to about 40 wt% based on the total weight of the polycarbonate-polysiloxane, in an amount effective to provide a total siloxane content of about 0.5 wt% to about 10 wt% based on the total weight of the composition; 0 wt% to about 1.0 wt% release agent; wherein the polycarbonate blend has a release from mold ejection force that is at least about 10% less than a substantially similar reference composition including only polycarbonates produced by an interfacial polymerization process, and releasing the composition from the mold.

Aspect 37. A method of forming a molded article comprising: injecting a composition into a mold, the composition consisting of: about 50 wt% to about 98 wt% of one or more polycarbonates produced by a melt polymerization process; about 2.0 wt% to about 50 wt% of a polycarbonate-polysiloxane copolymer with a siloxane content of about 10 wt% to about 40 wt% based on the total weight of the polycarbonate-polysiloxane, in an amount effective to provide a total siloxane content of about 0.5 wt% to about 10 wt% based on the total weight of the composition; 0 wt% to about 1.0 wt% release agent; wherein the polycarbonate blend has a release from mold ejection force that is at least about 10% less than a substantially similar reference composition including only polycarbonates produced by an interfacial polymerization process, and releasing the composition from the mold.

Aspect 38. The method of any one of aspects34-37, wherein the composition comprises: about 70 wt% to about 97.4 wt% polycarbonate; about 2.5 wt% to about 30 wt% polycarbonate-polysiloxane copolymer with a siloxane content of about 15 wt% to about 25 wt% based on the total weight of the polycarbonate-polysiloxane, in an amount effective to

provide a total siloxane content of about 0.5 wt% to about 5.5 wt% based on the total weight of the composition; and about 0.1 wt% to about 0.5 wt% release agent.

Aspect 39. The method of any one of aspects 34-37, wherein the composition comprises: 70 wt% to 97.4 wt% polycarbonate; 2.5 wt% to 30 wt% polycarbonate-polysiloxane copolymer with a siloxane content of 15 wt% to 25 wt% based on the total weight of the polycarbonate-polysiloxane, in an amount effective to provide a total siloxane content of 0.5 wt% to 5.5 wt% based on the total weight of the composition; and 0.1 wt% to 0.5 wt% release agent.

Aspect 40. The method of any one of aspects 34-39, wherein the release agent is present in an amount of 0.2 wt% or less.

Aspect 41. The method of any one of 34-40, wherein the polycarbonate has a molecular weight (Mw) of about 18,000 to about 40,000 g/mol.

Aspect 42. The method of any one of Aspects 34-40, wherein the polycarbonate has a molecular weight (Mw) of 18,000 to 40,000 g/mol.

Aspect 43. The method of any one of Aspects 34-41, wherein the polycarbonate-polysiloxane copolymer has a molecular weight (Mw) of about 19,500 to about 40,000 g/mol.

Aspect 44. The method of any one of Aspects 34-41, wherein the polycarbonate-polysiloxane copolymer has a molecular weight (Mw) of 19,500 to 40,000 g/mol.

Aspect 45. A polycarbonate blend comprising: about 50 wt% to about 98 wt% of one or more polycarbonates produced by a melt polymerization process; about 2 wt% to about 50 wt% of a polycarbonate-polysiloxane copolymer with a siloxane content of about 10 wt% to about 40 wt% based on the total weight of the polycarbonate-polysiloxane copolymer, in an amount effective to provide a total siloxane content of about 0.5 wt% to about 10 wt% based on the total weight of the polycarbonate blend; wherein the polycarbonate blend has a release from mold ejection force that is at least about 10% less than a substantially similar reference blend including only polycarbonates produced by an interfacial polymerization process when ejection force is evaluated by injection molding a sleeve formed from the polycarbonate blend in a core and determining the force necessary to remove the sleeve from the core.

Aspect 46. A polycarbonate blend comprising: 50 wt% to 98 wt% of one or more polycarbonates produced by a melt polymerization process; 2 wt% to 50 wt% of a polycarbonate-polysiloxane copolymer with a siloxane content of 10 wt% to 40 wt% based on the total weight of the polycarbonate-polysiloxane copolymer, in an amount effective to provide a total siloxane content of 0.5 wt% to 10 wt% based on the total weight of the polycarbonate blend; wherein the polycarbonate blend has a release from mold ejection force that is at least 10% less than a substantially similar reference blend including only polycarbonates produced by an interfacial polymerization process when ejection force is evaluated by injection molding a sleeve formed from the polycarbonate blend in a core and determining the force necessary to remove the sleeve from the core.

Aspect 47. A polycarbonate blend consisting essentially of: about 50 wt% to about 98 wt% of one or more polycarbonates produced by a melt polymerization process; about 2 wt% to about 50 wt% of a polycarbonate-polysiloxane copolymer with a siloxane content of about 10 wt% to about 40 wt% based on the total weight of the polycarbonate-polysiloxane copolymer, in an amount effective to provide a total siloxane content of about 0.5 wt% to about 10 wt% based on the total weight of the polycarbonate blend; wherein the polycarbonate blend has a release from mold ejection force that is at least about 10% less than a substantially similar reference blend including only polycarbonates produced by an interfacial polymerization process when ejection force is evaluated by injection molding a sleeve formed from the polycarbonate blend in a core and determining the force necessary to remove the sleeve from the core.

Aspect 48. A polycarbonate blend consisting of: about 50 wt% to about 98 wt% of one or more polycarbonates produced by a melt polymerization process; about 2 wt% to about 50 wt% of a polycarbonate-polysiloxane copolymer with a siloxane content of about 10 wt% to about 40 wt% based on the total weight of the polycarbonate-polysiloxane copolymer, in an amount effective to provide a total siloxane content of about 0.5 wt% to about 10 wt% based on the total weight of the polycarbonate blend; wherein the polycarbonate blend has a release from mold ejection force that is at least about 10% less than a substantially similar reference blend including only polycarbonates produced by an interfacial polymerization process when ejection force is evaluated by injection molding a sleeve formed from the polycarbonate blend in a core and determining the force necessary to remove the sleeve from the core.

## Examples

The following non-limited examples illustrate certain aspects of the disclosure.

Formulations were prepared using the components presented in Table 1:

Table 1

| | |
|---|---|
| PC1 | Linear Bisphenol A Polycarbonate homopolymer, produced via interfacial polymerization, Mw of about 18,800 g/mol as determined by GPC using polycarbonate standards, para-cumylphenol (PCP) end-capped |
| PC2 | Linear Bisphenol A Polycarbonate homopolymer, produced via interfacial polymerization, Mw of about 21,800 g/mol as determined by GPC using polycarbonate standards, para-cumylphenol (PCP) end-capped. |
| PC3 | Branched Bisphenol A Polycarbonate homopolymer, produced via melt polymerization, Mw of about 18,000 g/mol as determined by GPC using polycarbonates standards, BPA/Phenol end-capped. Fries level of 250-350 ppm. |
| PC4 | Branched Bisphenol A Polycarbonate homopolymer, produced via melt polymerization, Mw of about 20,600 g/mol as determined by GPC using polycarbonates standards, BPA/Phenol end-capped, Fries level of <400 ppm. |
| PC5 | Linear Bisphenol A Polycarbonate homopolymer, produced via interfacial polymerization, Mw of about 29,000 g/mol as determined by GPC using polycarbonate standards, phenol end-capped |
| PC6 | Branched Bisphenol A Polycarbonate homopolymer, produced via melt polymerization, Mw of about 29,000 g/mol as determined by GPC using polycarbonates standards, BPA/Phenol end-capped. Fries level of 900-1100 ppm. |
| PC-Si1 | PDMS (polydimethylsiloxane) - Bisphenol A Polycarbonate copolymer, produced via interfacial polymerization, 20 wt% siloxane, average PDMS D block length of 45 units (D45), Mw about 30,000 g/mol as determined by GPC using polycarbonate standards, para-cumylphenol (PCP) end-capped |
| PC-Si2 | Bisphenol A Polycarbonate copolymer, produced via interfacial polymerization, 6 wt% siloxane, average PDMS D block length of 45 units (D45), Mw about 23,000 g/mol as determined by GPC using polycarbonate standards, para-cumylphenol (PCP) end-capped |
| IIRG | Tris(2,4-ditert-butylphenyl)phosphite (Irgafos™ 168) |
| PETS | Pentaerythritol tetrastearate, >90% esterified |
| GTS | Octadecanoic acid, 1,2,3-propanetriyl ester (glycerol tristearate) |
| CB | Carbon black |

Tables 2A and 2B present ejection force and impact strength testing values.

Table 2A

| Components | CE1 | CE2 | CE3 | CE4 | E5 | CE6 | E7 | CE8 |
|---|---|---|---|---|---|---|---|---|
| PC1 | - | 25 | - | 25 | - | 30 | - | 40 |
| PC2 | - | 74.79 | - | 74.49 | - | 57.29 | - | 46.99 |
| PC3 | 5 | - | 5 | - | 30 | - | 40 | - |
| PC4 | 94.79 | - | 94.49 | - | 57.29 | - | 46.99 | |
| PETS | - | - | 0.3 | 0.3 | - | - | 0.3 | 0.3 |
| GTS | - | - | - | - | - | - | - | - |
| PC-Si1 | - | - | - | - | 12.5 | 12.5 | 12.5 | 12.5 |
| PC-Si2 | - | - | - | - | - | - | - | - |
| IRG | 0.06 | 0.06 | 0.06 | 0.06 | 0.06 | 0.06 | 0.06 | 0.06 |
| CB | 0.15 | 0.15 | 0.15 | 0.15 | 0.15 | 0.15 | 0.15 | 0.15 |
| | | | | | | | | |
| Ejection force (N) | 934 | 784 | 595 | 605 | 448 | 577 | 332 | 410 |
| Delta Ejection force vs. Comparative Example (%) | +19% (vs CE2) | - | -2% (vs CE4) | - | -22% (vs CE6) | - | -19% (vs CE8) | - |

(continued)

| Components | CE1 | CE2 | CE3 | CE4 | E5 | CE6 | E7 | CE8 |
|---|---|---|---|---|---|---|---|---|
| MVR(300°C, 1.2Kg) | 26 | 31 | 28 | 32 | 27 | 25 | 28 | 27 |
| INI at 3 mm 23°C | 18 | 53 | 10 | 31 | 52 | 54 | 54 | 54 |
| INI at 3mm 0°C | 10 | 12 | 9 | 10 | 50 | 49 | 48 | 50 |
| INI at 3mm -30°C | 8 | 9 | 8 | 8 | 19 | 24 | 17 | 21 |

Table 2B

| Components | E9 | CE10 | E11 | CE12 | CE13 | CE14 |
|---|---|---|---|---|---|---|
| PC1 | - | 40 | - | 60 | - | |
| PC2 | - | 46.99 | - | 14.49 | - | 58.19 |
| PC3 | 40 | - | 60 | - | - | - |
| PC4 | 46.99 | - | 14.49 | - | 58.19 | - |
| PETS | - | - | 0.3 | 0.3 | - | - |
| GTS | 0.3 | 0.3 | - | - | - | - |
| PC-Si1 | 12.5 | 12.5 | 25 | 25 | - | - |
| PC-Si2 | - | - | - | - | 41.6 | 41.6 |
| IRG | 0.06 | 0.06 | 0.06 | 0.06 | 0.06 | 0.06 |
| CB | 0.15 | 0.15 | 0.15 | 0.15 | 0.15 | 0.15 |
| | | | | | | |
| Ejection force (N) | 307 | 352 | 176 | 209 | 887 | 909 |
| Delta Ejection force vs. Comparative Example (%) | -13% (vs CE10) | | -16% (vs CE12) | | -2% (vs CE16) | |
| MVR(300°C, 1.2Kg) | 28 | 27 | 25 | 22 | 18 | 18 |
| INI at 3mm 23°C | 54 | 53 | 55 | 55 | 60 | 60 |
| INI at 3mm 0°C | 48 | 51 | 51 | 52 | 53 | 56 |
| INI at 3mm -30°C | 17 | 20 | 46 | 45 | 17 | 20 |

As demonstrated by the data:

1. The ejection force is significantly higher for polycarbonate compositions without a release agent when the polycarbonate is made by melt polymerization process (CE1) compared to the same composition based on polycarbonate made by interfacial process (CE2).
2. The ejection force is similar for polycarbonate compositions with 0.3% release agent (PETS) when the polycarbonate is made by melt polymerization process (CE3) compared to the same composition based on polycarbonate made by interfacial process (CE4).
3. Unexpectedly, the trend is different for compositions containing also PC-Si1 (E5-12), where compositions containing polycarbonate and Si-PC1 have significantly lower ejection force in various compositions when the polycarbonate is made by melt polymerization process compared to the same composition based on polycarbonate made by interfacial process in compositions, without release agent (E5 vs CE6), with 0.3% PETS (E7 vs CE8), with 0.3% GTS (E9 vs CE10) and at higher PC-Si1 loading (E11 vs CE12).
4. Trends are again different for PC-Si2, where the ejection force is similar for polycarbonate compositions containing Si-PC2,) when the polycarbonate is made by melt polymerization process (CE13) compared to the same composition based on polycarbonate made by interfacial process (CE14).

This demonstrates that the compositions give unexpected benefits in ejection force when using polycarbonate made by melt polymerization process in combination with particular PC-Si types. Effects are significantly positive for Si-PC

copolymers containing relatively high siloxane content (PC-Si1, having 20%), but not for Si-PC copolymers containing relatively low siloxane content (Si-PC2, having 6% siloxane). This demonstrates that optimization of the composition is possible when using polycarbonate made by melt polymerization process in combination with PC-Si having a relatively high siloxane loading.

Table 3

| Components | CE15 | E16 | E17 | E18 | E19 |
|---|---|---|---|---|---|
| PC1 | 40 | - | - | - | - |
| PC2 | 46.99 | - | - | - | - |
| PC3 with Fries level 375 | - | 40 | - | - | - |
| PC3 with Fries level 1000 | - | - | 40 | - | - |
| PC3 with Fries level 1300 | - | - | - | 40 | - |
| PC3 with Fries level 1800 | - | - | - | - | 40 |
| PC4 | - | 46.99 | 46.99 | 46.99 | 46.99 |
| PETS | 0.3 | 0.3 | 0.3 | 0.3 | 0.3 |
| PC-Si1 | 12.5 | 12.5 | 12.5 | 12.5 | 12.5 |
| IRG | 0.06 | 0.06 | 0.06 | 0.06 | 0.06 |
| CB | 0.15 | 0.15 | 0.15 | 0.15 | 0.15 |
| | | | | | |
| Ejection force (N) | 410 | 332 | 275 | 282 | 286 |
| MVR(300°C, 1.2Kg) | - | 28.49 | 26.92 | 30.3 | 29.04 |
| Fries (ppm) total composition | | 300 | 600 | 700 | 900 |

The results in the table show that the improvement in ejection force for compositions containing PC-Si1 and polycarbonate made by melt polymerization process compared to the same composition with polycarbonate made by interfacial polymerization process (CE15) are achieved for different Fries levels for the melt polycarbonate with Fries levels for the composition ranging from 300 to 900 ppm (E16-E19)

Thus, melt polycarbonate compositions including a PC-siloxane copolymer and release agent consistently had better release performance than substantially similar reference compositions including interfacial PC instead of melt PC.

Additional formulations are presented in Tables 4A and 4B. The samples include varying amounts of the PC-Si1 component with varying polycarbonate compositions and ratios.

Table 4A

| | 1. | 2. | 3. | 4. | 5. | 6. | 7. | 8. |
|---|---|---|---|---|---|---|---|---|
| Comp. | CE20 | CE21 | E22 | CE23 | 24 | 25 | E26 | E27 |
| PC1 | - | 25 | - | 30 | - | 30 | - | 30. |
| PC2 | - | 74.59 | - | 68.34 | - | 67.09 | - | 64.59 |
| PC3 | 5 | - | 30 | - | 30 | - | 30 | - |
| PC4 | 94.59 | - | 68.34 | - | 67.09 | - | 64.59 | - |
| PC5 | - | - | - | - | - | - | - | - |
| PC6 | - | - | - | - | - | - | - | - |
| PETS | 0.2 | 0.2 | 0.2 | 0.2 | 0.2 | 0.2 | 0.2 | 0.2 |
| PC-Si1 | - | - | 1.25 | 1.25 | 2.5 | 2.5 | 5 | 5 |
| IRG | 0.06 | 0.06 | 0.06 | 0.06 | 0.06 | 0.06 | 0.06 | 0.06 |
| CB | 0.15 | 0.15 | 0.15 | 0.15 | 0.15 | 0.15 | 0.15 | 0.15 |

(continued)

| | 1. | 2. | 3. | 4. | 5. | 6. | 7. | 8. |
|---|---|---|---|---|---|---|---|---|
| **Comp.** | **CE20** | **CE21** | **E22** | **CE23** | **24** | **25** | **E26** | **E27** |
| | | | | | | | | |
| Ejection force (N) | 689 | 758 | 641 | 722 | 681 | 732 | 592 | 698 |
| MVR (300 °C, 1.2 kg) | 26 | 32 | 31 | 33 | 31 | 30 | 28 | 29 |
| INI at 3 mm, 23 °C | 10.25 | 52.51 | 14.27 | 52.61 | 15.89 | 52.52 | 46.13 | 53.42 |
| INI at 3 mm, 0 °C | 9.48 | 10.87 | 10.25 | 16.8 | 12.77 | 18.36 | 14.9 | 37.08 |
| INI at 3 mm, -30 °C | 8.02 | 8.57 | 8.18 | 9.14 | 9.61 | 10.44 | 10.23 | 12.9 |

Table 4B

| | 9. | 10. | 11. | 12. | 13. | 14. | 15. | 16. |
|---|---|---|---|---|---|---|---|---|
| **Comp.** | **E28** | **CE29** | **E30** | **CE31** | **32** | **33** | **E34** | **E35** |
| PC1 | - | 35 | - | 40 | - | - | 16 | - |
| PC2 | - | 57.09 | - | 47.09 | - | - | 8.836 | 18.836 |
| PC3 | 35 | - | 40 | - | - | 47.09 | 24 | - |
| PC4 | 57.09 | - | 47.09 | - | 47.09 | - | 28.254 | 28.254 |
| PC5 | - | - | - | - | - | 40 | - | 16 |
| PC6 | - | - | - | - | 40 | - | - | 24 |
| PETS | 0.2 | 0.2 | 0.2 | 0.2 | 0.2 | 0.2 | 0.2 | 0.2 |
| PC-Si1 | 7.5 | 7.5 | 12.5 | 12.5 | 12.5 | 12.5 | 12.5 | 12.5 |
| IRG | 0.06 | 0.06 | 0.06 | 0.06 | 0.06 | 0.06 | 0.06 | 0.06 |
| CB | 0.15 | 0.15 | 0.15 | 0.15 | 0.15 | 0.15 | 0.15 | 0.15 |
| | | | | | | | | |
| Ejection force (N) | 520 | 636 | 451 | 526 | 596 | 604 | 470 | 541 |
| MVR (300 °C, 1.2 kg) | 27 | 29 | 25 | 26 | 10 | 10 | 24 | 10 |
| INI at 3 mm, 23 °C | 52.85 | 53.15 | 53.54 | 54.8 | 67.05 | 67.99 | 55.07 | 64.04 |
| INI at 3 mm, 0 °C | 18.96 | 47.21 | 47.02 | 50.22 | 62.58 | 64.61 | 10.9 | 61.76 |
| INI at 3 mm, -30 °C | 12.56 | 15.26 | 16.05 | 21.74 | 39.42 | 51.98 | 19.85 | 22.99 |

As demonstrated by the data:

1. The ejection force appears lower for polycarbonate compositions prepared with the melt polycarbonate. See Table 4A, E22 (melt PC) compared to CE23 (interfacial PC) and E26 (melt PC) compared to CE27 (interfacial PC).
2. The ejection force is lowest for polycarbonate composition having melt polycarbonate components at less than 400 ppm fries content (E30), even if interfacial polycarbonate is also present (E34).
3. The data continues the trend of lower ejection force compositions containing polycarbonate and Si-PC1 have significantly lower ejection force in various compositions when the polycarbonate is made by melt polymerization process compared to the same composition based on polycarbonate made by interfacial process.

This data further demonstrates that the compositions give unexpected benefits in ejection force when using polycarbonate made by melt polymerization process in combination with particular PC-Si types. Furthermore, a lower Fries content (higher molecular weight) of the melt polycarbonate by increase the ejection force observed.

The above description is intended to be illustrative, and not restrictive. For example, the above-described examples (or one or more aspects thereof) may be used in combination with each other. Other aspects can be used, such as by one of ordinary skill in the art upon reviewing the above description. Also, in the above Detailed Description, various

features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

**1.** A polycarbonate blend comprising:

50 wt% to 98 wt% of one or more polycarbonates produced by a melt polymerization process;
2 wt% to 50 wt% of a polycarbonate-polysiloxane copolymer with a siloxane content of 10 wt% to 40 wt% based on the total weight of the polycarbonate-polysiloxane copolymer, in an amount effective to provide a total siloxane content of 0.5 wt% to 10 wt% based on the total weight of the polycarbonate blend; and optionally, 0.05 wt% to 1.0 wt% release agent;
wherein the blend has a Fries number of 200 ppm or higher based on the total blend; and wherein

the polycarbonate blend has a release from mold ejection force that is at least 10% less than a substantially similar reference blend including only polycarbonates produced by an interfacial polymerization process; or the polycarbonate blend has a release from mold coefficient of friction that is at least 10% less than a substantially similar reference blend including polycarbonates produced by an interfacial polymerization process.

**2.** A molded article comprising the polycarbonate blend of claim 1, preferably having an ejection force of less than 600 N when ejection force of the molded article comprising the polycarbonate blend is evaluated by injection molding a sleeve comprising the polycarbonate blend in a core and determining the force necessary to remove the sleeve from the core.

**3.** The polycarbonate blend or molded article of claim 1 or claim 2, wherein the release agent is present in an amount of 0.1 wt% to 1 wt% based on the total weight of the polycarbonate blend or of the molded article;
preferably wherein the release agent comprises one or more of pentaerythritol stearate, glycerol monostearate and poly-alpha-olefin.

**4.** The polycarbonate blend or molded article of any one of claims 1-3, wherein the poly(carbonate-siloxane) copolymer comprises bisphenol carbonate units of the formula

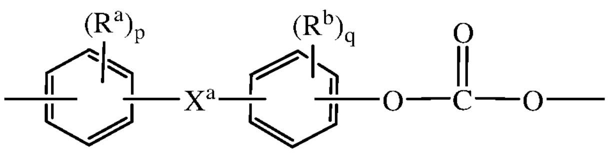

wherein

$R^a$ and $R^b$ are each independently $C_{1-12}$ alkyl, $C_{1-12}$ alkenyl, $C_{3-8}$ cycloalkyl, or $C_{1-12}$ alkoxy,
p and q are each independently 0 to 4, and
$X^a$ is a single bond, -O-, -S-, -S(O)-, $-S(O)_2-$, -C(O)-, a $C_{1-11}$ alkylidene of formula $-C(R^c)(R^d)-$ wherein $R^c$ and $R^d$ are each independently hydrogen or $C_{1-10}$ alkyl, or a group of the formula $-C(=R^e)-$ wherein $R^e$ is a divalent $C_{1-10}$ hydrocarbon group; and
siloxane units of the formulas

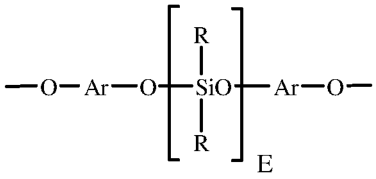 , 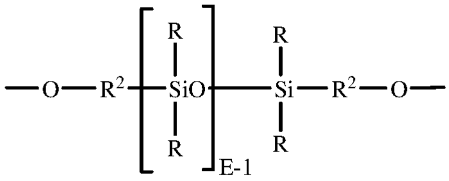 ,

or a combination comprising at least one of the foregoing, wherein
R is each independently a $C_{1-13}$ monovalent hydrocarbon group,
Ar is each independently a $C_{6-30}$ aromatic group,
$R^2$ is each independently a $C_{2-8}$ alkylene group, and
E has an average value of 10 to 200.

**5.** The polycarbonate blend or molded article of any one of claims 1-4, wherein the blend has a Fries number of about 400 ppm or higher based on the total blend.

**6.** The polycarbonate blend or molded article of any one of claims 1-5, wherein the blend or article comprises:

70 wt% to 97.4 wt% polycarbonate;
2.5 wt% to 30 wt% polycarbonate-polysiloxane copolymer with a siloxane content of 15 wt% to 25 wt% based on the total weight of the polycarbonate-polysiloxane copolymer, in an amount effective to provide a total siloxane content of 0.5 wt% to 5.5 wt%, preferably 0.5 wt% to 4 wt%, based on the total weight of the blend; and
0.1 wt% to 0.5 wt% of the release agent.

**7.** The polycarbonate blend or molded article of any one of claims 1-6, further comprising a processing aid, a heat stabilizer, an antioxidant, an ultra violet light absorber, or a combination comprising at least one of the foregoing.

**8.** The polycarbonate blend or molded article of any one of claims 1-7, wherein the polycarbonate blend has a melt volume rate ("MVR"), determined in accordance with ISO 1133 under a load of 1.2 Kg at 300 °C, higher than 10 $cm^3$/10 min.

**9.** The polycarbonate blend or molded article of any one of claims 1-8, wherein the polycarbonate blend has a ductile/brittle transition temperature of less than or equal to 10 °C as determined in accordance with ISO 180-1A on a molded part having a thickness of 3 mm.

**10.** The polycarbonate blend or molded article of any one of claims 1-9, wherein the polycarbonate blend or article further comprises at least one impact modifier.

**11.** The polycarbonate blend or molded article of any one or more of claims 1-10, further comprising a flame retardant, an anti-drip agent, or a combination comprising at least one of the foregoing, wherein optionally the flame retardant comprising an alkali metal salt of a perfluorinated $C_1$-$C_{16}$ alkyl sulfonate, an inorganic acid complex salt, or a combination comprising at least one of the foregoing.

**12.** The polycarbonate blend or molded article of any one or more of claims 1-11, further comprising a filler composition.

**13.** The molded article of any one of claims 2-12, wherein the molded article is a housing component of a consumer electronic device or an automotive bezel or reflector.

**14.** The molded article of any one of claims 2-13, wherein the molded article is metallized.

**15.** A method of forming a molded article comprising:

injecting a composition into a mold, the composition comprising:

50 wt% to 98 wt%, preferably 70 wt% to 97.4 wt%, of one or more polycarbonates produced by a melt polymerization process;
2 wt% to 50 wt% of a polycarbonate-polysiloxane copolymer with a siloxane content of 10 wt% to 40 wt% based on the total weight of the polycarbonate-polysiloxane copolymer, in an amount effective to provide a

total siloxane content of 0.5 wt% to 10 wt% based on the total weight of the blend, preferably 2.5 wt% to 30 wt% polycarbonate-polysiloxane copolymer with a siloxane content of 15 wt% to 25 wt% based on the total weight of the polycarbonate-polysiloxane copolymer, in an amount effective to provide a total siloxane content of 0.5 wt% to 5.5 wt% based on the total weight of the blend, wherein the polycarbonate blend has a release from mold ejection force that is at least 10% less than a substantially similar reference composition including polycarbonates produced by an interfacial polymerization process, and
optionally, 0.05 wt% to 1.0 wt% release agent and

releasing the composition from the mold.

**Patentansprüche**

1. Eine Polycarbonatmischung, die Folgendes umfasst:

50 Gewichtsprozent bis 98 Gewichtsprozent eines oder mehrerer Polycarbonate, die durch ein Schmelzpolymerisationsverfahren hergestellt wurden;
2 Gewichtsprozent bis 50 Gewichtsprozent eines Polycarbonat-Polysiloxan-Copolymers mit einem Siloxangehalt von 10 bis 40 Gewichtsprozent, basierend auf dem Gesamtgewicht des Polycarbonat-Polysiloxan-Copolymers, in einer Menge, die wirksam ist, um einen Gesamt-Siloxangehalt von 0,5 bis 10 Gewichtsprozent zu liefern, basierend auf dem Gesamtgewicht der Polycarbonatmischung, und

wahlweise 0,05 bis 1,0 Gewichtsprozent Trennmittel;
wobei die Mischung eine Fries-Zahl von 200 ppm oder höher hat, basierend auf der Gesamtmischung; und wobei
die Polycarbonatmischung eine Formtrenn-Ausstoßkraft hat, die mindestens 10% geringer ist als eine im Wesentlichen ähnliche Referenzmischung, die nur Polycarbonate einschließt, welche durch ein Grenzflächenpolymerisationsverfahren hergestellt wurden; oder
die Polycarbonatmischung einen Formtrenn-Reibungskoeffizienten hat, der mindestens 10% geringer ist als eine im Wesentlichen ähnliche Referenzmischung, die Polycarbonate einschließt, welche durch ein Grenzflächenpolymerisationsverfahren hergestellt wurden.

2. Ein Formteil, das die Polycarbonatmischung gemäß Anspruch 1 umfasst und vorzugsweise eine Ausstoßkraft von weniger als 600 N hat, wenn die Ausstoßkraft des Formteils, das die Polycarbonatmischung umfasst, bewertet wird durch Spritzgießen einer Hülse, die die Polycarbonatmischung umfasst, in einem Kern, und durch Bestimmen der Kraft, die erforderlich ist, um die Hülse vom Kern zu trennen.

3. Die Polycarbonatmischung oder das Formteil gemäß Anspruch 1 oder Anspruch 2, wobei das Trennmittel in einer Menge von 0,1 Gewichtsprozent bis 1 Gewichtsprozent vorliegt, basierend auf dem Gesamtgewicht der Polycarbonatmischung oder des Formteils;
wobei das Trennmittel vorzugsweise eines oder mehrere von Pentaerythritolstearat, Glycerolmonostearat und Poly-alpha-Olefin umfasst.

4. Die Polycarbonatmischung oder das Formteil gemäß einem beliebigen der Ansprüche 1-3, wobei das Poly(carbonat-siloxan-)Copolymer Bisphenolcarbonateinheiten mit der Formel

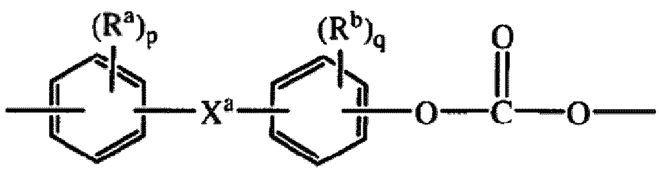

umfasst, worin
$R^a$ und $R^b$ jeweils unabhängig $C_{1-12}$-Alkyl, $C_{1-12}$-Alkenyl, $C_{3-8}$-Cycloalkyl oder $C_{1-12}$-Alkoxy sind,
p und q jeweils unabhängig 0 bis 4 sind und
$X^a$ eine Einfachbindung, -O-, -S-, -S(O)-, -S(O)$_2$-, -C(O)-, ein $C_{1-11}$-Alkyliden mit der Formel -C($R^c$) ($R^d$)-, worin $R^c$ und $R^d$ jeweils unabhängig Wasserstoff oder $C_{1-10}$-Alkyl sind, oder eine Gruppe mit der Formel -C(=$R^e$)- ist, worin

$R^e$ eine zweiwertige $C_{1-10}$-Kohlenwasserstoffgruppe ist; und Siloxaneinheiten mit den Formeln

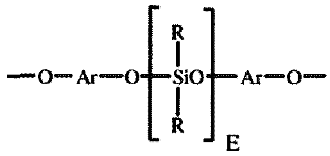
,
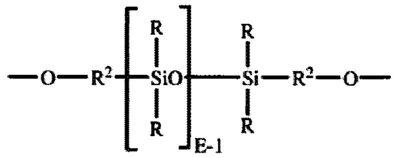
,

oder eine Kombination, die mindestens eines der oben Genannten umfasst, worin
R jeweils unabhängig eine einwertige $C_{1-13}$-Kohlenwasserstoffgruppe ist,
Ar jeweils unabhängig eine aromatische $C_{6-30}$-Gruppe ist,
$R^2$ jeweils unabhängig eine $C_{2-8}$-Alkylengruppe ist und
E einen Durchschnittswert von 10 bis 200 hat.

**5.** Die Polycarbonatmischung oder das Formteil gemäß einem beliebigen der Ansprüche 1-4, wobei die Mischung eine Fries-Zahl von ungefähr 400 ppm oder höher, basierend auf der Gesamtmischung, hat.

**6.** Die Polycarbonatmischung oder das Formteil gemäß einem beliebigen der Ansprüche 1-5, wobei der Mischung oder der Gegenstand Folgendes umfasst:

70 bis 97,4 Gewichtsprozent Polycarbonat;
2,5 bis 30 Gewichtsprozent Polycarbonat-Polysiloxan-Copolymer mit einem Siloxangehalt von 15 bis 25 Gewichtsprozent, basierend auf dem Gesamtgewicht des Polycarbonat-Polysiloxan-Copolymers, in einer Menge, die wirksam ist, um einen Gesamt-Siloxangehalt von 0,5 bis 5,5 Gewichtsprozent, vorzugsweise 0,5 bis 4 Gewichtsprozent, zu liefern, basierend auf dem Gesamtgewicht der Mischung; und
0,1 bis 0,5 Gewichtsprozent des Trennmittels.

**7.** Die Polycarbonatmischung oder das Formteil gemäß einem beliebigen der Ansprüche 1-6, die/das weiter eine Verarbeitungshilfe, einen Wärmestabilisator, ein Antioxidans, ein UV-Licht-Absorptionsmittel oder eine Kombination umfasst, die mindestens eines der oben Genannten umfasst.

**8.** Die Polycarbonatmischung oder das Formteil gemäß einem beliebigen der Ansprüche 1-7, wobei die Polycarbonatmischung eine Schmelzvolumenrate (melt volume rate, "MVR") hat, bestimmt gemäß ISO 1133 unter einer Last von 1,2 kg bei 300°C, höher als 10 $cm^3$/10 min.

**9.** Die Polycarbonatmischung oder das Formteil gemäß einem beliebigen der Ansprüche 1-8, wobei die Polycarbonatmischung eine Risshaltetemperatur von höchstens 10°C hat, bestimmt gemäß ISO 180-1A an einem Formteil, das eine Dicke von 3 mm hat.

**10.** Die Polycarbonatmischung oder das Formteil gemäß einem beliebigen der Ansprüche 1-9, wobei die Polycarbonatmischung oder der Gegenstand weiter mindestens einen Elastifikator umfasst.

**11.** Die Polycarbonatmischung oder das Formteil gemäß einem beliebigen oder mehreren der Ansprüche 1-10, die weiter ein Flammverzögerungsmittel, ein Antitropfmittel oder eine Kombination umfasst, die mindestens eines der oben Genannten umfasst, wobei das Flammverzögerungsmittel wahlweise ein Alkalimetallsalz eines perfluorierten $C_1$-$C_{16}$-Alkylsulfonats, ein anorganisches Säurekomplexsalz oder eine Kombination umfasst, die mindestens eines der oben Genannten umfasst.

**12.** Die Polycarbonatmischung oder das Formteil gemäß einem oder mehreren der Ansprüche 1-11, die/das weiter eine Füllstoffzusammensetzung umfasst.

**13.** Das Formteil gemäß einem beliebigen der Ansprüche 2-12, wobei das Formteil eine Gehäusekomponente einer Konsumelektronikvorrichtung oder eine Kraftfahrzeug-Einfassung oder ein Kraftfahrzeug-Reflektor ist.

**14.** Das Formteil gemäß einem beliebigen der Ansprüche 2-13, wobei das Formteil metallisiert ist.

**15.** Ein Verfahren zum Formen eines Formteils, das Folgendes umfasst:

das Einspritzen einer Zusammensetzung in eine Form, wobei die Zusammensetzung Folgendes umfasst:

50 bis 98 Gewichtsprozent, vorzugsweise 70 bis 97,4 Gewichtsprozent, eines oder mehrerer Polycarbonate, hergestellt durch ein Schmelzpolymerisationsverfahren;
2 bis 50 Gewichtsprozent eines Polycarbonat-Polysiloxan-Copolymers mit einem Siloxangehalt von 10 bis 40 Gewichtsprozent, basierend auf dem Gesamtgewicht des Polycarbonat-Polysiloxan-Copolymers, in einer Menge, die wirksam ist, um einen Gesamt-Siloxangehalt von 0,5 bis 10 Gewichtsprozent zu liefern, basierend auf dem Gesamtgewicht der Mischung; vorzugsweise 2,5 bis 30 Gewichtsprozent Polycarbonat-Polysiloxan-Copolymer mit einem Siloxangehalt von 15 bis 25 Gewichtsprozent, basierend auf dem Gesamtgewicht des Polycarbonat-Polysiloxan-Copolymers, in einer Menge, die wirksam ist, um einen Gesamt-Siloxangehalt von 0,5 bis 5,5 Gewichtsprozent zu liefern, basierend auf dem Gesamtgewicht der Mischung, wobei die Polycarbonatmischung eine Formtrenn-Ausstoßkraft hat, die mindestens 10% geringer ist als eine im Wesentlichen ähnliche Referenzzusammensetzung, die Polycarbonate einschließt, welche durch ein Grenzflächenpolymerisationsverfahren hergestellt wurden; und wahlweise 0,05 bis 1,0 Gewichtsprozent Trennmittel
und

das Trennen der Zusammensetzung von der Form.

## Revendications

**1.** Mélange de polycarbonates comprenant :

50 % en poids à 98 % en poids d'un ou plusieurs polycarbonates produits par un procédé de polymérisation à l'état fondu ;
2 % en poids à 50 % en poids d'un copolymère polycarbonate-polysiloxane ayant une teneur en siloxane de 10 % en poids à 40 % en poids par rapport au poids total du copolymère polycarbonate-polysiloxane, en une quantité efficace pour fournir une teneur totale en siloxane de 0,5 % en poids à 10 % en poids par rapport au poids total du mélange de polycarbonates ; et

facultativement, 0,05 % en poids à 1,0 % en poids d'agent de démoulage ;
où le mélange a un indice de Fries de 200 ppm ou plus par rapport au mélange total ; et
où
le mélange de polycarbonates a une force de démoulage inférieure d'au moins 10 %
à celle d'un mélange de référence sensiblement similaire comprenant uniquement des polycarbonates produits par un procédé de polymérisation interfaciale ; ou
le mélange de polycarbonates a un coefficient de frottement de démoulage inférieur d'au moins 10 % à celui d'un mélange de référence sensiblement similaire comprenant des polycarbonates produits par un procédé de polymérisation interfaciale.

**2.** Article moulé comprenant le mélange de polycarbonates selon la revendication 1, ayant de préférence une force d'éjection inférieure à 600 N lorsque la force d'éjection de l'article moulé comprenant le mélange de polycarbonates est évaluée par moulage par injection d'un manchon comprenant le mélange de polycarbonates dans un noyau et en déterminant la force nécessaire pour retirer le manchon du noyau.

**3.** Mélange de polycarbonates ou article moulé selon la revendication 1 ou 2, dans lequel l'agent de démoulage

est présent en une quantité de 0,1 % en poids à 1 % en poids par rapport au poids total du mélange de polycarbonates ou de l'article moulé ;
de préférence dans lequel l'agent de démoulage comprend un ou plusieurs des composés suivants : stéarate de pentaérythritol, monostéarate de glycérol et poly-alpha-oléfine.

**4.** Mélange de polycarbonate ou article moulé selon l'une quelconque des revendications 1 à 3, dans lequel le copolymère poly(carbonate-siloxane) comprend des unités bisphénol carbonate de formule

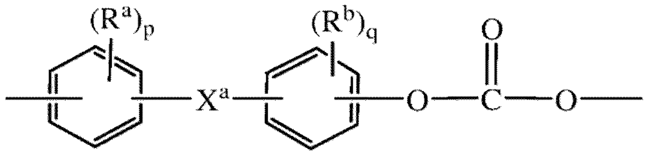

dans laquelle

$R^a$ et $R^b$ représentent chacun indépendamment un groupe alkyle en $C_{1-12}$, alcényle en $C_{1-12}$, cycloalkyle en $C_{3-8}$ ou alcoxy en $C_{1-12}$,

p et q sont chacun indépendamment 0 à 4, et

$X^a$ est une liaison simple, -O-, -S-, -S(O)-, $-S(O)_2-$, -C(O)-, un alkylidène en $C_{1-11}$ de formule $-C(R^c)(R^d)-$ dans laquelle $R^c$ et $R^d$ représentent chacun indépendamment de l'hydrogène ou de l'alkyle en $C_{1-10}$, ou un groupe de formule $-C(=R^e)-$ dans laquelle $R^e$ représente un groupe hydrocarboné divalent en $C_{1-10}$ ; et des unités siloxane de formules

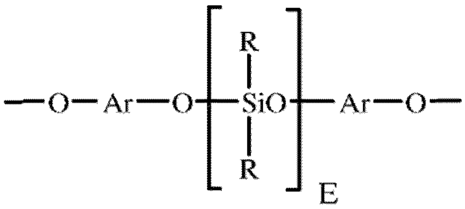

,

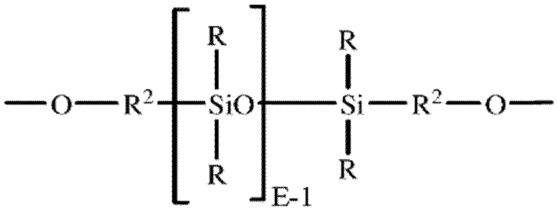

,

ou une combinaison comprenant au moins l'une des unités précédentes, où

R représente indépendamment un groupe hydrocarboné monovalent en $C_{1-13}$,

Ar est indépendamment un groupe aromatique en $C_{6-30}$,

$R^2$ est indépendamment un groupe alkylène en $C_{2-8}$, et

E a une valeur moyenne de 10 à 200.

5. Mélange de polycarbonates ou article moulé selon l'une quelconque des revendications 1 à 4, où le mélange a un indice de Fries d'environ 400 ppm ou plus sur la base du mélange total.

6. Mélange de polycarbonates ou article moulé selon l'une quelconque des revendications 1 à 5, dans lequel le mélange ou l'article comprend :

70 % en poids à 97,4 % en poids de polycarbonate ;

2,5 % en poids à 30 % en poids de copolymère polycarbonate-polysiloxane ayant une teneur en siloxane de 15 % à 25 % en poids par rapport au poids total du copolymère polycarbonate-polysiloxane, en une quantité efficace pour fournir une teneur totale en siloxane de 0,5 % à 5,5 % en poids, de préférence de 0,5 % à 4 % en poids, par rapport au poids total du mélange ;

et

0,1 % à 0,5 % en poids de l'agent de démoulage.

7. Mélange de polycarbonate ou article moulé selon l'une quelconque des revendications 1 à 6, comprenant en outre un adjuvant de traitement, un stabilisateur thermique, un antioxydant, un absorbeur de rayons ultraviolets ou une combinaison comprenant au moins l'un des éléments précédents.

8. Mélange de polycarbonates ou article moulé selon l'une quelconque des revendications 1 à 7, dans lequel le mélange de polycarbonates a un indice de fluidité à chaud (« MVR »), déterminé conformément à la norme ISO 1133 sous une charge de 1,2 kg à 300 °C, supérieur à 10 $cm^3$/10 min.

9. Mélange de polycarbonates ou article moulé selon l'une quelconque des revendications 1 à 8, où le mélange de polycarbonates a une température de transition ductile/cassante inférieure ou égale à 10 °C, déterminée conformément à la norme ISO 180 1A sur un article moulé d'une épaisseur de 3 mm.

10. Mélange de polycarbonate ou article moulé selon l'une quelconque des revendications 1 à 9, où le mélange de polycarbonate ou l'article comprend en outre au moins un modificateur de choc.

**11.** Mélange de polycarbonates ou article moulé selon l'une quelconque des revendications 1 à 10, comprenant en outre un retardateur de flamme, un agent anti-goutte ou une combinaison comprenant au moins l'un des éléments précités, dans lequel, en option, le retardateur de flamme comprend un sel de métal alcalin d'un alkylsulfonate perfluoré en $C_1$-$C_{16}$, un sel complexe d'acide inorganique ou une combinaison comprenant au moins l'un des éléments précités.

**12.** Mélange de polycarbonate ou article moulé selon l'une quelconque des revendications 1 à 11, comprenant en outre une composition de charge.

**13.** Article moulé selon l'une quelconque des revendications 2 à 12, où l'article moulé est un composant de boîtier d'un appareil électronique grand public ou un cadre ou un réflecteur automobile.

**14.** Article moulé selon l'une quelconque des revendications 2 à 13, où l'article moulé est métallisé.

**15.** Procédé de formation d'un article moulé comprenant :
l'injection d'une composition dans un moule, la composition comprenant :

50 % en poids à 98 % en poids, de préférence 70 % en poids à 97,4 % en poids, d'un ou plusieurs polycarbonates produits par un procédé de polymérisation par fusion ; 2 % à 50 % en poids d'un copolymère polycarbonate-polysiloxane ayant une teneur en siloxane de 10 % à 40 % en poids par rapport au poids total du copolymère polycarbonate-polysiloxane, en une quantité efficace pour fournir une teneur totale en siloxane de 0,5 % à 10 % en poids par rapport au poids total du mélange, de préférence 2,5 % en poids à 30 % en poids de copolymère polycarbonate-polysiloxane ayant une teneur en siloxane de 15 % en poids à 25 % en poids par rapport au poids total du copolymère polycarbonate-polysiloxane, en une quantité efficace pour fournir une teneur totale en siloxane de 0,5 % en poids à 5,5 % en poids par rapport au poids total du mélange, où le mélange de polycarbonates présente une force de démoulage inférieure d'au moins 10 % à celle d'une composition de référence sensiblement similaire comprenant des polycarbonates produits par un procédé de polymérisation interfaciale, et
facultativement, 0,05 % à 1,0 % en poids d'agent de démoulage
et
le démoulage de la composition.

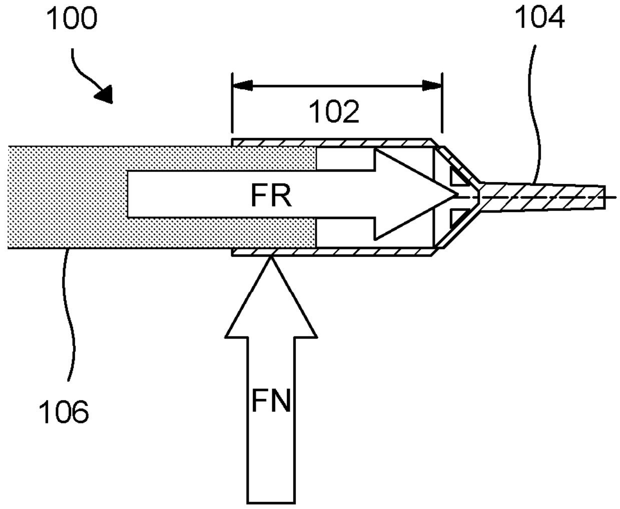


FIG. 1

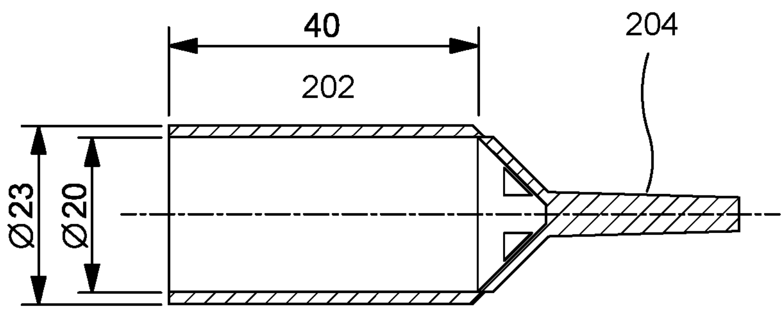


FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016016850 A
- US 2007010635 A
- US 2014275368 A1
- US 7786246 B
- EP 1757634 A